# EUROPEAN PATENT SPECIFICATION

(11) **EP 3 031 709 B1**
(45) Date of publication and mention of the grant of the patent: **22.04.2020**
(21) Application number: 14830081.7
(22) Date of filing: 23.07.2014
(51) Int. Cl.: B62K 23/04

(54) **FORWARD AND BACKWARD SPEED ADJUSTING HANDLE FOR ELECTRIC VEHICLE AND ELECTRIC VEHICLE POWER CONTROL DEVICE**
VORWÄRTS- UND RÜCKWÄRTS-GESCHWINDIGKEITSSTELLGRIFF FÜR EIN ELEKTROFAHRZEUG UND LEISTUNGSREGELUNGSVORRICHTUNG FÜR EIN ELEKTROFAHRZEUG
POIGNÉE DE RÉGLAGE DE VITESSE AVANT ET ARRIÈRE POUR VÉHICULE ÉLECTRIQUE ET DISPOSITIF DE COMMANDE DE PUISSANCE DE VÉHICULE ÉLECTRIQUE

(30) Priority: 24.07.2013 CN 201310312066; 09.10.2013 CN 201310466272
(43) Date of publication of application: 15.06.2016
(73) Proprietor: Nanjing Vmoto Co., Ltd., Nanjing, Jiangsu 212200 (CN)
(72) Inventor: JING, Jiqun, Nanjing, Jiangsu 212200 (CN); WENG, Baoguo, Nanjing, Jiangsu 212200 (CN)
(74) Representative: Sach, Greg Robert
(86) International application number: PCT/CN2014/082858
(87) International publication number: WO 2015/010625

(56) References cited:
- EP-A1- 2 154 057
- EP-A1- 2 332 819
- WO-A1-2013/031383
- WO-A2-2004/052671
- CN-A- 101 898 611
- CN-A- 103 332 253
- CN-U- 201 737 114
- CN-U- 203 558 176
- CN-U- 203 558 178
- JP-A- H11 310 183
- JP-A- H11 310 183
- US-A1- 2010 212 630

## Description

### FIELD OF INVENTION

The present invention relates to a technical field of automatic control, and more particularly to a forward and backward speed adjusting handle for electric vehicles and an electric vehicle power control device comprising the speed adjusting handle.

### BACKGROUND ARTS

The conventional electric vehicle, comprising the electric bicycle with two wheels or three wheels and the electric motorcycle with two wheels or three wheels, generally comprises the motor for driving the electric vehicle, the controller for controlling the motor, the speed adjusting handle and the reversing switch for controlling the motion direction and the motion speed. The speed adjusting handle comprises the handle bar, the handle base mounted on the handle bar, and the rotating handle rotatably provided on the handle bar. Without applying any external force on the rotating handle, the rotating handle is in the reset position. By applying the external force on the rotating handle, the rotating handle is only able to rotate towards one direction away from the reset position, usually counter-clockwise, instead of rotating towards the opposite direction.

The reversing switch is provided on the handle base and electrically connected to the controller. When the electric vehicle is moving forward, the rider merely needs to rotate the rotating handle, and accordingly the controller controls the motor to operate under different powers according to the rotation angle of the rotating handle, namely the distance of the rotating handle away from the reset position. Generally, the larger rotation angle (the further the rotating handle away from the reset position), the larger forward torque outputted by the motor to drive the electric vehicle to move forward. In order to move backward, the reversing switch is pressed down to close the reversing switch, and herein, by rotating the rotating handle, the controller controls the motor to operate under different powers according to the rotation angle of the rotating handle, namely the distance of the rotating handle away from the reset position. Generally, the larger rotation angle (the further the rotating handle away from the reset position), the larger backward torque outputted by the motor to drive the electric vehicle to move backward. The damage of the reversing switch or the poor contact of the reversing switch with the wiring harness of the controller may cause incorrect motion direction and thus the danger. In order to improve the reliability, the reversing switch usually adopts the relatively expensive imported device, which increases the vehicle costs.

Besides, it is difficult for the rider to accomplish braking with the conventional speed adjusting handle. In order to brake and stop the electric vehicle which is moving forward, the motor needs to output the backward torque, towards the direction opposite to the direction of the output torque of the motor which drives the electric vehicle to move forward. Therefore, the rider is required to press down the reversing switch and simultaneously rotate the rotating handle, thereby generating the backward torque by the motor and braking the motor and the electric vehicle (gradually slowing down the rotation of the motor). Pressing down the reversing switch and simultaneously rotating the rotating handle are inconvenient in operation and it is highly likely to make mistakes.

A removal of the reversing switch not only saves the costs, but also reduces the danger. The removal of the reversing switch necessitates a modification of the conventional speed adjusting handle; however, if the speed adjusting handle after the modification (a speed adjusting handle capable of rotating the rotating handle to control the motor to rotate forward and backward, without reversing switch) is more expensive than the conventional speed adjusting handle minus the price of the reversing switch, it is undoubtedly difficult to promote the application of the speed adjusting handle after the modification. Therefore, it is necessary to modify the conventional speed adjusting handle to obtain a simple structure, low manufacture costs and assembling costs, and high reliability.
The publication of patent application N° CN101898611 discloses a handle according to the pre-characterizing of the appended claim 1.

### SUMMARY OF THE INVENTION

An object of the present invention is to provide a forward and backward speed adjusting handle for an electric vehicles that can be rotated forward and backward so as to control the forward and backward movement of the electric vehicle. The forward and backward speed adjusting handle of the present invention has a simple structure, convenient operations and high reliability, omits reversing switch, and has costs equivalent to a conventional speed adjusting handle.

A forward and backward speed adjusting handle for an electric vehicle, comprising: a handle bar, a fixing element consisting of a handle base mounted on the handle bar , and a rotating handle rotatably provided on the handle bar, a left-rotating spring and a right-rotating spring are provided between the fixing element and the rotating handle; the left-rotating spring enables the rotating handle to rotate counter-clockwise with respect to the handle bar, and the right-rotating spring enables the rotating handle to rotate clockwise with respect to the handle bar; under the effect of both the left-rotating spring and the right-rotating spring, the rotating handle is in a reset position; when an external force is applied on the rotating handle, the rotating handle can rotate clockwise or counter-clockwise from the reset position.

A Hall effect sensor and an arc-shaped permanent magnet are oppositely arranged separately on the rotating handle and the fixing element without touching one another; when the rotating handle rotates, the Hall effect sensor moves relatively to the arc-shaped permanent magnet, detects the different positions of the arc-shaped permanent magnet, and outputs corresponding different signals.

The present invention has the following benefits. In operation, the Hall effect sensor is electrically connected to a controller. The controller regards an output signal of the Hall effect sensor, when the rotating handle is in the reset position, as a reference signal. When the rotating handle rotates away from the reset position towards a first direction, such as counter-clockwise, the output signal of the Hall effect sensor becomes larger than the reference signal (the output signal of the Hall effect sensor may be smaller than the reference signal, but is illustrated herein to be larger, just for convenience), and increases along with an increase of a rotation angle of the rotating handle (relative to the reset position). When the rotating handle rotates away from the reset position towards a second direction opposite to the first direction, the output signal of the Hall effect sensor becomes smaller than the reference signal, and decreases along with the increase of the rotation angle of the rotating handle (relative to the reset position). The controller controls the motor according to the output signal of the Hall effect sensor. When the Hall effect sensor outputs the reference signal, the motor outputs no torque under the control of the controller and maintains an initial state (for example, the motor neither rotates forward nor rotates backward). When the output signal of the Hall effect sensor is larger than the reference signal, the motor outputs a counter-clockwise torque under the control of the controller (the motor may output a clockwise torque, and is illustrated to output the counter-clockwise torque, just for convenience); the counter-clockwise torque outputted by the motor increases with an increase of the output signal of the Hall effect sensor, which drives the motor to rotate forward (the motor may rotate backward, and is illustrated to rotate forward, just for convenience). When the output signal of the Hall effect sensor is smaller than the reference signal, the motor outputs the clockwise torque under the control of the controller; the clockwise torque outputted by the motor increases with a decrease of the output signal of the Hall effect sensor, which drives the motor to rotate backward. If the initial state of the motor is rotating forward, in order to brake, the rotating handle is so rotated that the output signal of the Hall effect sensor is smaller than the reference signal; under the control of the controller, the motor outputs the clockwise torque, wherein a direction of the clockwise torque is opposite to a direction of the motor rotating forward, and thus the motor gradually stops rotating forward (gradually slowing down). If it is intended to rapidly brake the motor which has the initial state of rotating forward, the rotating handle is so rotated that the Hall effect sensor outputs smaller signal, and accordingly the motor outputs larger clockwise torque. Therefore, it is realized to control the motor to rotate forward and backward, and to control the electric vehicle to move forward, move backward and brake,

Through cooperation between the arc-shaped permanent magnet and the Hall effect sensor, with the relatively long permanent magnet (arc length), a range of the output signal of the Hall effect sensor is relatively large. Therefore, even though the rotating handle of each speed adjusting handle in massive production may not have exactly the same reset position, changes of the output signal of the Hall effect sensor, caused by different reset positions of the rotating handles, are still within a margin of error of the output signal of the Hall effect sensor. Therefore, the reference signal outputted by the Hall effect sensor of each speed adjusting handle is basically the same.

The speed adjusting handle comprises the two springs, the left-rotating spring and the right-rotating spring, while an ordinary speed adjusting handle has merely one spring; the speed adjusting handle omits the reversing switch. Therefore, the speed adjusting handle of the present invention has almost the same costs with the ordinary speed adjusting handle. The speed adjusting handle of the present invention has the simple structure and the convenient assembling. The speed adjusting handle of the present invention has a low accuracy requirement on assembled positions of the arc-shaped permanent magnet and the Hall effect sensor, needless of any special alignment about a relative position between the arc-shaped permanent magnet and the Hall effect sensor. The speed adjusting handle of the present invention has relatively low manufacture costs and assembling costs, and is able to control the electric vehicle to move forward and backward by rotating forward and backward.

In the speed adjusting handle of the present invention, the arc-shaped permanent magnet is coaxial with the rotating handle; one of the arc-shaped permanent magnet and the Hall effect sensor is provided at an end face of the rotating handle, and the other one of the arc-shaped permanent magnet and the Hall effect sensor is provided on the handle base; the Hall effect sensor and the arc-shaped permanent magnet are faced against each other in a direction parallel with an axis of the rotating handle.

In the speed adjusting handle of the present invention, the arc-shaped permanent magnet is coaxial with the rotating handle; one of the arc-shaped permanent magnet and the Hall effect sensor is provided at an outer periphery of the rotating handle, and the other one of the arc-shaped permanent magnet and the Hall effect sensor is provided on the handle base; the Hall effect sensor and the arc-shaped permanent magnet are faced against each other in a direction vertical to the axis of the rotating handle.

In the speed adjusting handle of the present invention, a stiffness of the left-rotating spring and a stiffness of the right-rotating spring satisfy that an external force for rotating the rotating handle counter-clockwise away from the reset position is smaller than an external force for rotating the rotating handle clockwise away from the reset position. In other words, the counter-clockwise rotation and the clockwise rotation of the rotating handle feel differently for the riders to distinguish. In most cases, the counter-clockwise rotation of the rotating handle controls the electric vehicle to move forward, while the clockwise rotation of the rotating handle controls the electric vehicle to move backward. Of course, the counter-clockwise rotation of the rotating handle can control the electric vehicle to move backward, and accordingly the clockwise rotation of the rotating handle controls the electric vehicle to move forward. In order to realize a relatively small force for rotating the rotating handle to drive the electric vehicle to move forward and a relatively large force for rotating the rotating handle to drive the electric vehicle to move backward, it is necessary for the left-rotating spring and the right-rotating spring to have different stiffness (the external force for rotating the rotating handle counter-clockwise is smaller than the external force for rotating the rotating handle clockwise). Besides, the bigger difference between the stiffness of the left-rotating spring and the stiffness of the right-rotating spring, the better. The bigger difference in the stiffness of the two springs, the smaller the external force for rotating the rotating handle counter-clockwise away from the reset position compared with the external force for rotating the rotating handle clockwise, and the bigger difference in the feelings of the counter-clockwise rotation and the clockwise rotation. The bigger difference in the stiffness of the two springs results in that the rotating handle of each speed adjusting handle in the massive production has basically the same reset position and further ensures that the Hall effect sensor of each speed adjusting handle outputs basically the same reference signal.

In the speed adjusting handle of the present invention, the outer periphery of the rotating handle has an arc groove which is coaxial with the rotating handle, wherein two inner end faces of the arc groove are at two ends in a circumferential direction of the rotating handle; a spring seat is provided on the handle base, and the left-rotating spring is a coiled compression spring; an axis of the coiled compression spring is vertical to the axis of the rotating handle; one end of the coiled compression spring is biased against the spring seat, and the other end of the coiled compression spring contacts one of the inner end faces of the arc groove. The coiled compression spring applies a force on the rotating handle via the inner end face of the arc groove along a tangent direction of the rotating handle (to drive the rotating handle to rotate counter-clockwise), so the rotating handle rotates flexibly, without being stuck.

In the speed adjusting handle of the present invention, the rotating handle is in the reset position under the common effect of the two springs. Although the springs in the massive production have the substantially uniform resilience, there is still an error in the resilience of the springs, more or less. Therefore, the rotating handle of each speed adjusting handle in the massive production has the reset position not exactly the same. Despite that the changes of the output signal of the Hall effect sensor, caused by the different reset positions of the rotating handles, are still within the margin of error of the output signal of the Hall effect sensor, the reference signal outputted by the Hall effect sensor in each speed adjusting handle may be different. Preferably, in order to overcome a possible difference in the reference signals, as a further improvement, the handle base has a sliding groove running along a direction of the axis of the coiled compression spring, and a slider is slidably provided within the sliding groove; the sliding groove is communicated with the arc groove; a restricting element, for restricting a maximal sliding distance of the slider relative to the spring seat, is provided in the sliding groove; the two ends of the coiled compression spring are respectively biased against the spring seat and the slider. When the rotating handle is in the reset position, the left-rotating spring drives the slider to contact the restricting element, and the right-rotating spring drives the slider to contact one of the inner end faces of the arc groove. Such a mechanical positioning that the slider contacts the restricting element and the inner end face of the arc groove at the same time, guarantees that the rotating handle is reliably in the reset position, avoids the error in the reset position of the rotating handle of each speed adjusting handle in the massive production caused by the error in the spring resilience, ensures exactly the same reset position of the rotating handle of each speed adjusting handle, and further ensures exactly the same reference signal of the Hall effect sensor in each speed adjusting handle. The forward and backward speed adjusting handle for the electric vehicles operates as follows. For rotating the rotating handle counter-clockwise, a counter-clockwise torque (external force) is applied onto the rotating handle, and then the rotating handle rotates counter-clockwise against the resilience of the right-rotating spring, wherein the slider always contacts the restricting element under the effect of the left-rotating spring. When the external force is canceled, the rotating handle rotates clockwise under the effect of the right-rotating spring, and arrives in the reset position when the inner end surface of the arc groove contacts the slider. For rotating the rotating handle clockwise, a clockwise torque (external force) is applied onto the rotating handle, and then the rotating handle rotates clockwise against the resilience of the left-rotating spring; meanwhile, the inner end face of the arc groove pushes the slider, and the slider is detached from the restricting element and moves towards the spring seat within the sliding groove. When the external force is canceled, under the effect of the left-rotating spring, the slider overcomes the resilience of the right-rotating spring and pushes the inner end face of the arc groove to rotate counter-clockwise; the rotating handle arrives in the reset position when the slider contacts the restricting element (and also the inner end face of the arc groove).

In order to ensure that the slider slides smoothly within the sliding groove, the inner end face of the arc groove which contacts the slider is a curved surface. When the rotating handle is exerted with external force, the rotating handle is rotated and the inner end face of the arc groove pushes the slider to move, wherein contacting points between the curved surface and the slider are at the axis of the coiled compression spring, in such a manner that an action force onto the slider by the coiled compression spring and an action force onto the slider by the inner end face of the arc groove are both in the direction of the axis of the coiled compression spring, thereby preventing the slider from turning and ensuring a smooth sliding of the slider within the sliding groove.

In order to restrict a maximal angle at which the rotating handle rotates counter-clockwise and clockwise, and to improve the convenience of operation, the speed adjusting handle of the present invention further comprises a position-limiting device, for restricting the maximal angle at which the rotating handle is able to rotate counter-clockwise away from the reset position and the maximal angle at which the rotating handle is able to rotate clockwise away from the reset position.

The position-limiting device has various embodiments. Preferably, in one embodiment, the position-limiting device comprises an arc position-limiting groove and a position-limiting block, wherein: the handle base has the arc position-limiting groove which is coaxial with the rotating handle; two inner end faces of the arc position-limiting groove are at two ends along the circumferential direction of the rotating handle; the position-limiting block which is inserted into the arc position-limiting groove along a radial direction of the rotating handle is provided at the outer periphery of the rotating handle; when the rotating handle rotates counter-clockwise at the maximal angle away from the reset position under the external force, the position-limiting block contacts one of the two inner end faces of the arc position-limiting groove, thereby forbidding the rotating handle to rotate counter-clockwise any further; when the rotating handle rotates clockwise at the maximal angle away from the reset position under the external force, the position-limiting block contacts the other one of the two inner end faces of the arc position-limiting groove, thereby forbidding the rotating handle to rotate clockwise any further.

Preferably, in another embodiment, the position-limiting device comprises an arc position-limiting groove and a position-limiting block, wherein: the arc position-limiting groove which is coaxial with the rotating handle is provided at the outer periphery of the rotating handle; two inner end faces of the arc position-limiting groove are at two ends along the circumferential direction of the rotating handle; the position-limiting block which is inserted into the arc position-limiting groove along a radial direction of the rotating handle is provided on the handle base; when the rotating handle rotates counter-clockwise at the maximal angle away from the reset position under the external force, the position-limiting block contacts one of the two inner end faces of the arc position-limiting groove, thereby forbidding the rotating handle to rotate counter-clockwise any further; when the rotating handle rotates clockwise at the maximal angle away from the reset position, the position-limiting block contacts the other one of the two inner end faces of the arc position-limiting groove, thereby forbidding the rotating handle to rotate clockwise any further. In order to facilitate assembling the position-limiting block and increase a manufacture and assembling efficiency, the handle base has a through-hole in the radial direction of the rotating handle; the position-limiting block is detachably connected to the through-hole and runs into the arc position-limiting groove through the through-hole. In order to facilitate assembling the Hall effect sensor and increase the manufacture and assembling efficiency, the arc-shaped permanent magnet is provided at the outer periphery of the rotating handle; the arc-shaped permanent magnet and the arc position-limiting groove are located at different sections of the rotating handle; the position-limiting block is connected to a sensor seat where the Hall effect sensor is mounted; the position-limiting block and the Hall effect sensor cross through the through-holes; the Hall effect sensor and the arc-shaped permanent magnet are faced against each other in the direction vertical to the axis of the rotating handle.

In the speed adjusting handle of the present invention, the rotating handle is in the reset position under the common effect of the two springs. Although the springs in the massive production have the substantially uniform resilience, there is still an error in the resilience of the springs, more or less. Therefore, the rotating handle of each speed adjusting handle in the massive production has the reset position not exactly the same. Despite that the changes of the output signal of the Hall effect sensor, caused by the different reset positions of the rotating handles, are still within the margin of error of the output signal of the Hall effect sensor, the reference signal outputted by the Hall effect sensor in each speed adjusting handle may be different. Preferably, in order to overcome a difference in the reference signals, as a further improvement, in the forward and backward speed adjusting handle for the electric vehicles, a boss is provided at the end face of the rotating handle and the handle base has a circular groove, wherein the boss is inserted into the circular groove. The circular groove is coaxial with the rotating handle; a slider which is able to slide around an axis of the circular groove is provided within the circular groove; the left-rotating spring, for pushing the slider to move counter-clockwise within the circular groove, is provided between the slider and the spring seat at a bottom of the circular groove; a reversed position-limiting barrier, for determining a limit position to which the slider is able to move counter-clockwise, is provided at a lateral wall of the circular groove; when the rotating handle is in the reset position, the left-rotating spring drives the slider to contact the reversed position-limiting barrier, and meanwhile the right-rotating spring drives the boss to contact the slider. Such a mechanical positioning that the slider contacts the reversed position-limiting barrier and the boss at the same time ensures that the rotating handle is located reliably in the reset position, avoids the error in the reset position of the rotating handle of each speed adjusting handle in the massive production due to the error in the resilience of the springs, and guarantees exactly the same reset position of the rotating handle of each speed adjusting handle, so as to further guarantee exactly the same reference signal of the Hall effect sensor of each speed adjusting handle. The forward and backward speed adjusting handle for the electric vehicles operates as follows. For rotating the rotating handle counter-clockwise, a counter-clockwise torque (external force) is applied onto the rotating handle, and then the rotating handle is rotated counter-clockwise against the resilience of the right-rotating spring, wherein the slider always contacts the reversed position-limiting barrier under the effect of the left-rotating spring. When the external force is canceled, the rotating handle rotates clockwise under the effect of the right-rotating spring and arrives in the reset position when the boss contacts the slider. For rotating the rotating handle clockwise, a clockwise torque (external force) is applied onto the rotating handle, and then the rotating handle is rotated clockwise against the resilience of the left-rotating spring; in the meantime, the boss pushes the slider, and the slider is detached from the reversed position-limiting barrier and moves clockwise within the circular groove. When the external force is canceled, under the effect of the left-rotating spring, the slider overcomes the resilience of the right-rotating spring and pushes the boss to move counter-clockwise within the circular groove; the rotating handle arrives in the reset position when the slider contacts the reversed position-limiting barrier (and also the boss).

In the forward and backward speed adjusting handle for the electric vehicles, the slider comprises a guiding portion, slidably contacting the lateral wall of the circular groove, and a supporting portion, disposed in a radial direction of the circular groove; the spring seat is arc-shaped; the guiding portion is provided between the lateral wall of the circular groove and the spring seat, in contact with the lateral wall of the circular groove and the spring seat; the left-rotating spring is provided between an end of the spring seat and the supporting portion. Because of the guiding portion, the slider slides flexibly within the circular groove and is prevented from being stuck within the circular groove and being disenabled to move. The supporting portion facilitates a connection to the left-rotating spring.

In the forward and backward speed adjusting handle for the electric vehicles, a forward position-limiting barrier is provided at the bottom of the circular groove; when the rotating handle rotates counter-clockwise at a certain angle away from the reset position under the external force, the forward position-limiting barrier contacts the rotating handle, thereby forbidding the rotating handle to rotate counter-clockwise any further; wherein the certain angle is a maximal angle at which the rotating handle is able to rotate counter-clockwise away from the reset position under the external force. When the speed adjusting handle is rotating counter-clockwise, due to a restriction by the forward position-limiting barrier, the rotating handle can be rotated counter-clockwise without any worry about operation. Even if the rotating handle is rotated at an overlarge angle, the rotating handle is restricted and stopped by the forward position-limiting barrier, facilitating the operation.

In the forward and backward speed adjusting handle for the electric vehicles, one of the left-rotating spring and the right-rotating spring is the coiled compression spring provided between the handle base and the rotating handle, and the other one of the left-rotating spring and the right-rotating spring is a torsion spring provided between the handle bar and the rotating handle.

In the forward and backward speed adjusting handle for the electric vehicles, the arc-shaped permanent magnet has a central angle of more than 90°, for increasing a distance by which the arc-shaped permanent magnet is able to move relative to the Hall effect sensor, and increasing a resolution of the output signal of the Hall effect sensor.

In the forward and backward speed adjusting handle for the electric vehicles, the output signal of the Hall effect sensor is a voltage signal at a range of x-y; in the reset position, the output signal of the Hall effect sensor is around x+(y-x)/2.

In the forward and backward speed adjusting handle for the electric vehicles, the output signal of the Hall effect sensor is a pulse width modulation signal having a duty cycle of 5%-95%; in the reset position, the output signal of the Hall effect sensor has the duty cycle of around 50%.

The present invention further provides an electric vehicle power control device which has a simple structure, convenient operations and a high reliability.

The electric vehicle power control device of the present invention comprises: the forward and backward speed adjusting handle for the electric vehicle, and a controller for controlling a motor for driving the electric vehicle, wherein: the controller is electrically connected to the Hall effect sensor; the controller receives the output signal of the Hall effect sensor, and controls the motor to output the counter-clockwise torque or the clockwise torque according to different output signals of the Hall effect sensor.

The electric vehicle power control device operates as follows. The controller regards the output signal of the Hall effect sensor when the rotating handle is in the reset position as the reference signal. When the rotating handle is rotated away from the reset position towards a direction (such as counter-clockwise), the output signal of the Hall effect sensor is larger than the reference signal (or smaller, herein illustrated to be larger for convenience), and increases along with the increase of the rotation angle of the rotating handle (relative to the reset position); when the rotating handle is rotated away from the reset position towards an opposite direction, the output signal of the Hall effect sensor is smaller than the reference signal, and decreases along with the increase of the rotation angle of the rotating handle (relative to the reset position). The controller controls the motor according to the output signal of the Hall effect sensor. When the Hall effect sensor outputs the reference signal, the motor outputs no torque under the control of the controller; and the motor maintains the initial state (for example, the motor neither rotates forward nor rotates backward); when the output signal of the Hall effect sensor is larger than the reference signal, the motor outputs the counter-clockwise torque under the control of the controller (or the clockwise torque, herein illustrated to be the counter-clockwise torque for convenience), and the counter-clockwise torque outputted by the motor increases with the increase of the output signal of the Hall effect sensor, so that the motor rotates forward (or backward, herein illustrated to rotate forward for convenience) to drive the electric vehicle to move forward; when the output signal of the Hall effect sensor is smaller than the reference signal, the motor outputs the clockwise torque under the control of the controller, and the clockwise torque outputted by the motor increases along with the output signal of the Hall effect sensor decreases, so that the motor rotates backward to drive the electric vehicle to move backward. If the initial state of the motor is rotating forward, when the electric vehicle is moving forward, in order to accomplish braking, the rotating handle is so rotated that the output signal of the Hall effect sensor is smaller than the reference signal; the motor outputs the clockwise torque under the control of the controller, wherein the direction of the clockwise torque is opposite to the direction of the motor rotating forward. As a result, the motor gradually stops rotating forward (the motor gradually slows down), the electric vehicle gradually slows down, so as to accomplish braking. If it is intended to rapidly brake the motor having the initial state of rotating forward (when the electric vehicle is moving forward), the rotating handle is so rotated that the Hall effect sensor outputs smaller signal and the motor outputs larger clockwise torque. Therefore, it is realized to control the motor to rotate forward and backward, and to control the electric vehicle to move forward, move backward and brake.

For the electric vehicle power control device, when the rotating handle is in the reset position, the output signal of the Hall effect sensor is the reference signal T. Given that the output signal of the Hall effect sensor R when the rotating handle is at some position, when T+T^{∗}5%≥R≥T-T^{∗}5%, the motor outputs no torque; a direction of the torque outputted by the motor when R>T+T^{∗}5% is opposite to a direction of the torque outputted by the motor when R<T-T^{∗}5%, a value of the torque outputted by the motor when R>T+T^{∗}5% increases along with R-(T+T^{∗}5%) increases; a value of the torque outputted by the motor when R<T-T^{∗}5% increase along with (T-T^{∗}5%)-R increases. In the massive production, the reset position of the rotating handle of each speed adjusting handle may not be exactly the same due to the error in assembling, the error in the resilience of the springs, etc., which further results in that the reference signal T of each speed adjusting handle is not exactly the same. If a constant value is provided as a judgment threshold for the different torques outputted by the motor under the control of the controller, the constant value fails to match with the reference signal T of each speed adjusting handle which is not exactly the same. In order to overcome such failure, the present invention provides a value range T±T^{∗}5% which serves as the judgment threshold for the different torques outputted by the motor under the control of the controller, namely the motor outputs no torque when T+T^{∗}5%≥R≥T-T^{∗}5% and outputs torque when R>T+T^{∗}5% and R<T-T^{∗}5%. The electric vehicle power control device is applicable for the massive production with high manufacture efficiency and a high reliability. The present invention has advantages as follows. Compared with prior arts, the forward and backward speed adjusting handle for the electric vehicles, provided by the present invention, has a simple structure, low costs, high reliability, and convenient operations due to the removal of the reversing switch. Especially, it is unnecessary to press down the reversing switch and rotating the rotating handle so that the output signal of the Hall effect sensor is smaller than the reference signal at the same time, which improves the convenience and reliability of the operations of the present invention, improves security in driving the vehicle and reduces manufacture costs.

These and other objectives, features, and advantages of the present invention will become apparent from the following detailed description, the accompanying drawings, and the appended claims.

### BRIEF DESCRIPTION OF THE DRAWINGS

Fig. 1 is a perspective view of a rotating handle according to a first preferred embodiment of the present invention.
Fig. 2 is a front view of the rotating handle according to the first preferred embodiment of the present invention.
Fig. 3 is a right view of the rotating handle according to the first preferred embodiment of the present invention (a right view of Fig. 2).
Fig. 4 is a sectional view of a speed adjusting handle in a reset position according to the first preferred embodiment of the present invention.
Fig. 5 is a sectional view of the rotating handle of the speed adjusting handle, rotated counter-clockwise to a position-limiting device, according to the first preferred embodiment of the present invention.
Fig. 6 is a sectional view of the rotating handle of the speed adjusting handle, rotated clockwise to the position-limiting device, according to the first preferred embodiment of the present invention.
Fig. 7 is a sketch view of a section A-A of Fig. 4.
Fig. 8 is an exploded view of the speed adjusting handle according to the first preferred embodiment of the present invention.
Fig. 9 is a sectional view of the speed adjusting handle in the reset position according to a third preferred embodiment of the present invention.
Fig. 10 is a sketch view of the speed adjusting handle according to a fourth preferred embodiment of the present invention.
Fig. 11 is a sketch view of a section B-B of Fig. 10.
Fig. 12 is an exploded view of the speed adjusting handle according to the fourth preferred embodiment of the present invention.
Fig. 13 is a first sectional view of the speed adjusting handle in the reset position according to the fourth preferred embodiment of the present invention.
Fig. 14 is a first sectional view of the rotating handle of the speed adjusting handle, rotated counter-clockwise to the position-limiting device, according to the fourth preferred embodiment of the present invention.
Fig. 15 is a first sectional view of the rotating handle of the speed adjusting handle, rotated clockwise to the position-limiting device, according to the fourth preferred embodiment of the present invention.
Fig. 16 is a second sectional view of the speed adjusting handle in the reset position according to the fourth preferred embodiment of the present invention.
Fig. 17 is a second sectional view of the rotating handle of the speed adjusting handle, rotated counter-clockwise to the position-limiting device, according to the fourth preferred embodiment of the present invention.
Fig. 18 is a second sectional view of the rotating handle of the speed adjusting handle, rotated clockwise to the position-limiting device, according to the fourth preferred embodiment of the present invention.
Fig. 19 is a sketch view of relative positions of the rotating handle, a position-limiting block and a slider according to the fourth preferred embodiment of the present invention.
Fig. 20 is a perspective view of the rotating handle according to the fourth preferred embodiment of the present invention.
Fig. 21 is another perspective view of the rotating handle according to the fourth preferred embodiment of the present invention.
Fig. 22 is yet another perspective view of the rotating handle according to the fourth preferred embodiment of the present invention.
Fig. 23 is a side elevation view of the rotating handle according to the fourth preferred embodiment of the present invention.
Fig. 24 is a perspective view of a fixing element according to the fourth preferred embodiment of the present invention.
Fig. 25 is another perspective view of the fixing element according to the fourth preferred embodiment of the present invention.
Fig. 26 is yet another perspective view of the fixing element according to the fourth preferred embodiment of the present invention.
Fig. 27 is yet another perspective view of the fixing element according to the fourth preferred embodiment of the present invention.

### DETAILED DESCRIPTION OF THE EMBODIMENTS

One skilled in the art will understand that the embodiment of the present invention as showed in the drawings and described below is exemplary only and not intended to be limiting. Its embodiments have been showed and described for the purposes of illustrating the functional and structural principles of the present invention and are subject to change without departure from such principles. Therefore, this invention includes all modifications encompassed within the scope of the following claims.

### First preferred embodiment

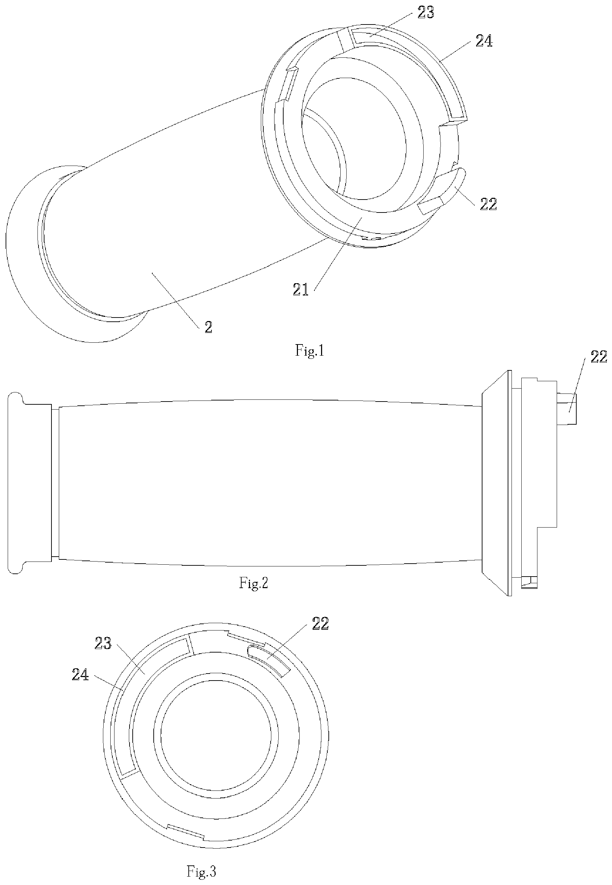

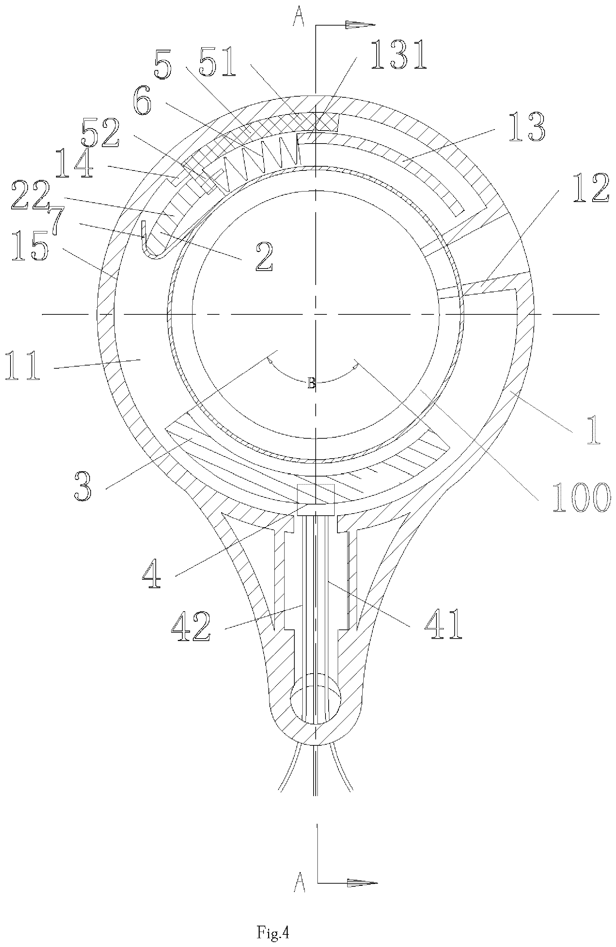

Referring to Figs. 4-8 of the drawings, according to a first preferred embodiment of the present invention, a forward and backward speed adjusting handle for electric vehicles comprises a handle bar 100, a fixing element formed by a handle base 1 mounted on the handle bar 100, and a rotating handle 2 rotatably provided on the handle bar 100. Referring to Figs. 1-3, a boss 22 and an arc-shaped body 24 having an arc groove 23 are provided at an end face 21 of the rotating handle 2 axially facing the handle base 1. The arc groove 23 is for containing an arc magnetic steel 3 (arc-shaped permanent magnet). The arc-shaped permanent magnet has a central angle B of around 100°.

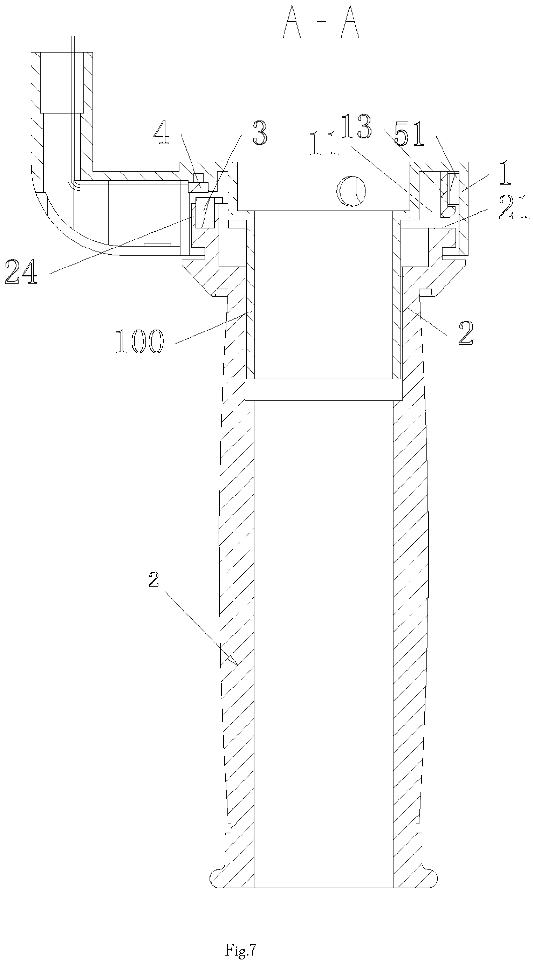

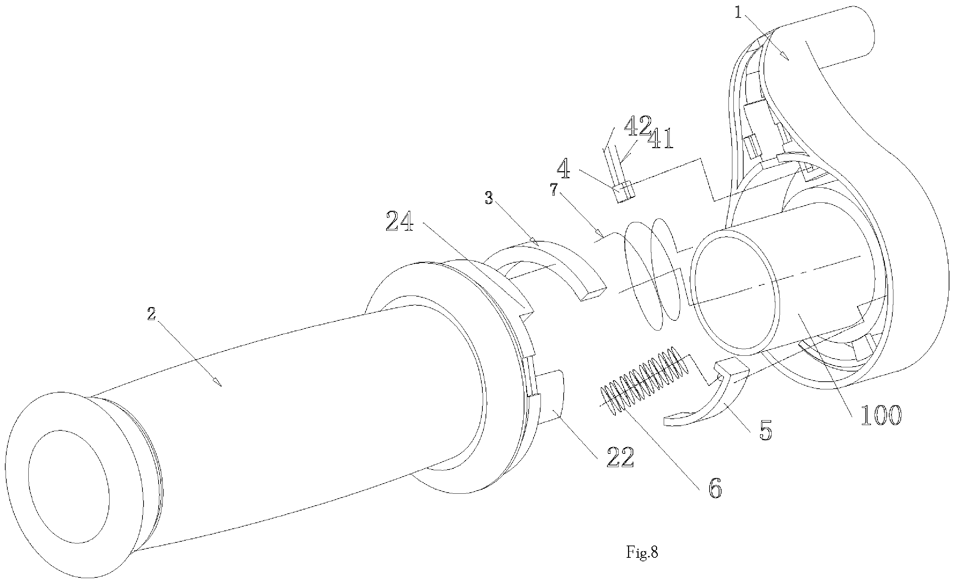

As showed in Figs. 7 and 8, the handle base 1 axially facing the rotating handle 2 has a circular groove 11. The circular groove 11, the rotating handle, the handle bar, the arc magnetic steel are all coaxial. A forward position-limiting barrier 12, an arc spring seat 13 and a Hall effect sensor 4 are provided at a bottom of the circular groove 11.

A reversed position-limiting barrier 14 protruding into the circular groove is provided at an outer lateral wall 15 of the circular groove. The arc magnetic steel 3 and the Hall effect sensor 4 are respectively provided inside the arc-shaped body 24 of the rotating handle and on the handle base, facing against each other but with no contact. When the rotating hand rotates, the Hall effect sensor moves relatively to the arc-shaped permanent magnet, detects the different positions of the arc-shaped permanent magnet, and outputs corresponding different signals. The Hall effect sensor has a wiring harness consisting of three wires, wherein two wires are power source wires 41 which supply the Hall effect sensor with a voltage of around DC5V, and one wire is a position signal output wire 42. The arc-shaped permanent magnet moves to the different positions relative to the Hall effect sensor, and an output signal of the position signal output wire of the Hall effect sensor is at a range of 0.8V-4.3V.

A slider 5 comprises a guiding portion 51 slidably contacting the outer lateral wall 15 of the circular groove, and a supporting portion 52 disposed along a radial direction of the circular groove. The guiding portion 51 is provided between the outer lateral wall 15 of the circular groove and the spring seat 13, and contacts with the outer lateral wall 15 and the spring seat 13. The slider 5 is able to slide around an axis of the circular groove along the outer lateral wall of the circular groove. A left-rotating spring 6 (coiled compression spring) is provided between an end of the spring seat 131 and the supporting portion 52, wherein the end of the spring seat 131 faces against the supporting portion 52, for pushing the slider to move counter-clockwise within the circular groove until the supporting portion 52 contacts the reversed position-limiting barrier. In other words, the reversed position-limiting barrier restricts a limit position to which the slider is able to move counter-clockwise within the circular groove.

The boss 22 and the arc magnetic steel 3 in the arc-shaped body 24 are inserted into the circular groove 11, and located between the supporting portion 52 and the forward position-limiting barrier 12.

A right-rotating spring 7 is a torsion spring whose one end is mounted on the handle bar and the other end is mounted on the boss. The torsion spring 7 gives the rotating handle a tendency to rotate clockwise relative to the handle bar, so the boss contacts the supporting portion under an effect of the torsion spring. Without applying nay external force onto the rotating handle, the rotating handle is in the reset position, wherein the left rotation spring drives a left side of the slider to contact a right side of the reversed position-limiting barrier, and meanwhile, the right rotation spring drives a right side of the boss to contact the left side of the slider. As showed in Fig. 4, in the reset position, the Hall effect sensor is at a middle position of the arc magnetic steel. When the rotating handle is in the reset position, the Hall effect sensor outputs a DC2.5V signal as a reference signal to a controller.

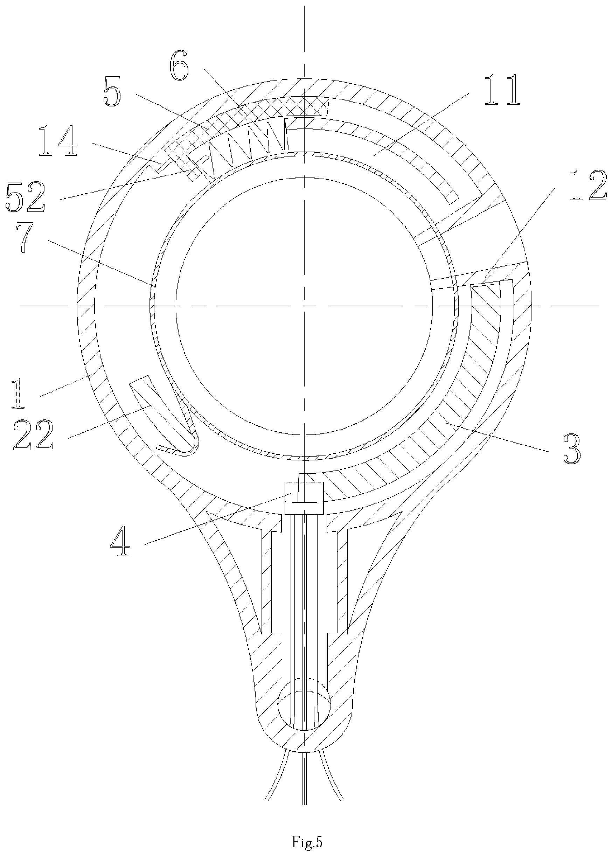

As showed in Fig. 5, in order to drive the electric vehicle to move forward, a counter-clockwise torque is applied onto the rotating handle to rotate the rotating handle counter-clockwise; the rotating handle rotates counter-clockwise against a resilience of the right-rotating spring and leaves the reset position. Herein, the slider remains stationary (the slider always contacts the reversed position-limiting barrier under the effect of the left-rotating spring). With a rotation angle of the rotating handle (relative to the reset position) increases, the arc-shaped magnet steel gradually moves (rotating counter-clockwise) relative to the Hall effect sensor; the output signal of the Hall effect sensor gradually increases from 2.5V. When the arc-shaped body 24 contacts the forward position-limiting barrier 12 in a circumferential direction, the rotating handle is no longer able to rotate counter-clockwise any further. Herein, the Hall effect sensor is at a left end of the arc magnetic steel; the output signal of the Hall effect sensor reaches a maximum of 4.3V. The controller controls the motor to output larger torque according to the increase of the output signal of the Hall effect sensor, so that the electric vehicle gradually speeds up in moving forward. When the external force is canceled, the rotating handle rotates clockwise under the effect of the right-rotating spring, and arrives in the reset position when the boss contacts the slider.

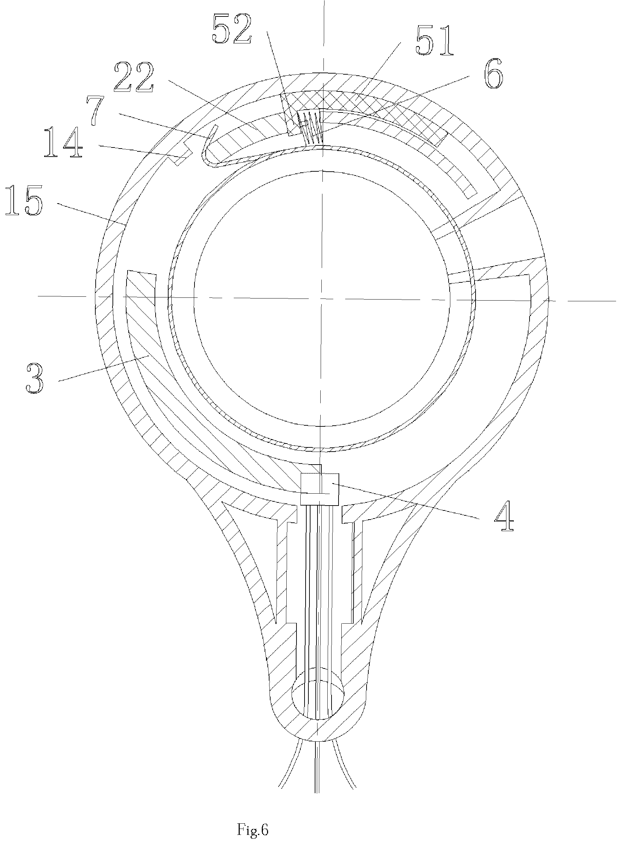

As showed in Fig. 6, in order to drive the electric vehicle to move backward or brake the electric vehicle which is moving forward, a clockwise torque is applied onto the rotating handle to rotate the rotating handle clockwise; the rotating handle rotates clockwise against a resilience of the left-rotating spring. In the meantime, the boss of the rotating handle pushes the slider to detach the slider from the reversed position-limiting barrier; the slider moves clockwise within the circular groove. With the rotation angle of the rotating handle (relative to the reset position) gradually increases, the left-rotating spring 6 between the supporting portion and the spring seat is gradually compressed; the arc magnet steel gradually moves (rotating clockwise) relative to the Hall effect sensor; and the output signal of the Hall effect sensor gradually decreases from 2.5V. When the left-rotating spring 6 can not be compressed any more, the rotating handle is disenable to rotate clockwise any further; the Hall effect sensor is at a right end of the arc magnetic steel; and the output signal of the Hall effect sensor reaches a minimum of 0.8V. The controller controls the motor to output larger backward torque according to the decrease of the output signal of the Hall effect sensor, so that the electric vehicle gradually speeds up in moving backward or brakes during moving forward. When the external force is canceled, the slider overcomes the resilience of the right-rotating spring under the effect of the left-rotating spring, and pushes the boss to rotate counter-clockwise within the circular groove. The rotating handle arrives in the reset position when the slider contacts the reversed position-limiting barrier (and also the boss).

### Second preferred embodiment

A second preferred embodiment differs from the first preferred embodiment in that: when the arc-shaped permanent magnet rotates to different positions relative to the Hall effect sensor, the output signal of the Hall effect sensor is a pulse width modulation signal having a duty cycle of 5%-95%. In the reset position, the output signal of the Hall effect sensor (the reference signal) has the duty cycle of around 50%.

In order to drive the electric vehicle to move forward, the counter-clockwise torque is applied onto the rotating handle to rotate the rotating handle counter-clockwise. With the rotation angle of the rotating handle (relative to the reset position) gradually increases, the duty cycle of the output signal of the Hall effect sensor gradually increases from 50%. When the arc-shaped body 24 contacts the forward position-limiting barrier 12 in the circumferential direction, the rotating handle is no longer to rotate counter-clockwise any further; the duty cycle of the output signal of the Hall effect sensor reaches a maximum of 95%. The controller controls the motor to output larger torque according to the increase of the duty cycle of the output signal of the Hall effect sensor, so that the electric vehicle gradually speeds up in moving forward.

In order to drive the electric vehicle to move backward or brake during moving forward, the clockwise torque is applied on to the rotating handle to rotate the rotating handle clockwise. With the rotation angle of the rotating handle (relative to the reset position) gradually increase, the duty cycle of the output signal of the Hall effect sensor gradually decreases from 50%. When the left-rotating spring 6 can not be compressed any more, the rotating handle is forbidden to rotate clockwise any further; the duty cycle of the output signal of the Hall effect sensor reaches a minimum of 5%. The controller controls the motor to output larger backward torque according to the decrease of the duty cycle of the output signal of the Hall effect sensor, so that the electric vehicle gradually speeds up in moving backward or brakes during moving forward.

### Third preferred embodiment

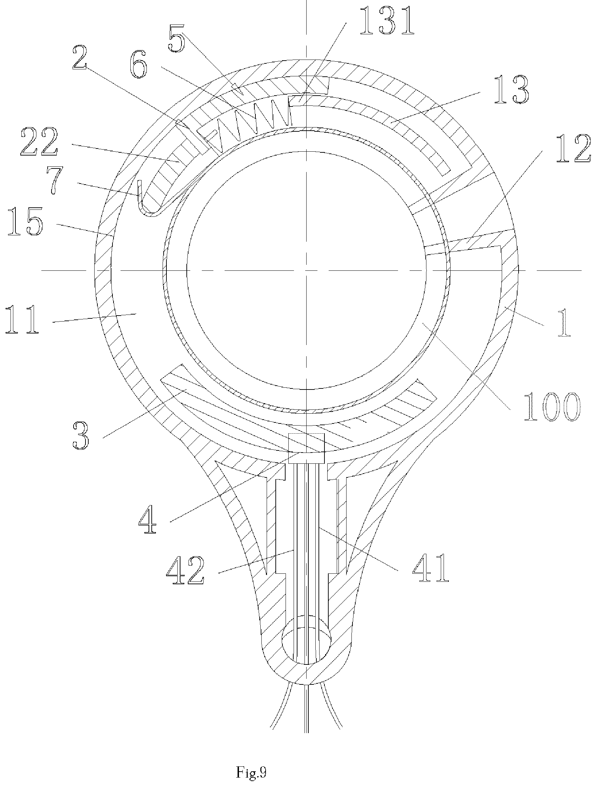

Referring to Fig. 9 (and Figs. 5 and 6), a third preferred embodiment differs from the first preferred embodiment in that: no reversed position-limiting barrier 14, in the first preferred embodiment, is provided the outer lateral wall 15 of the circular groove in the third preferred embodiment; the rotating handle 2 and the slider 5 are integrated together (the slider 5 can be regarded as a part of the rotating handle 2) in the third preferred embodiment. Under the effect of both the left-rotating spring and the right-rotating spring, the rotating handle is in the reset position. When the rotating handle is rotated, the rotating handle and the slider rotate together.

### Fourth preferred embodiment

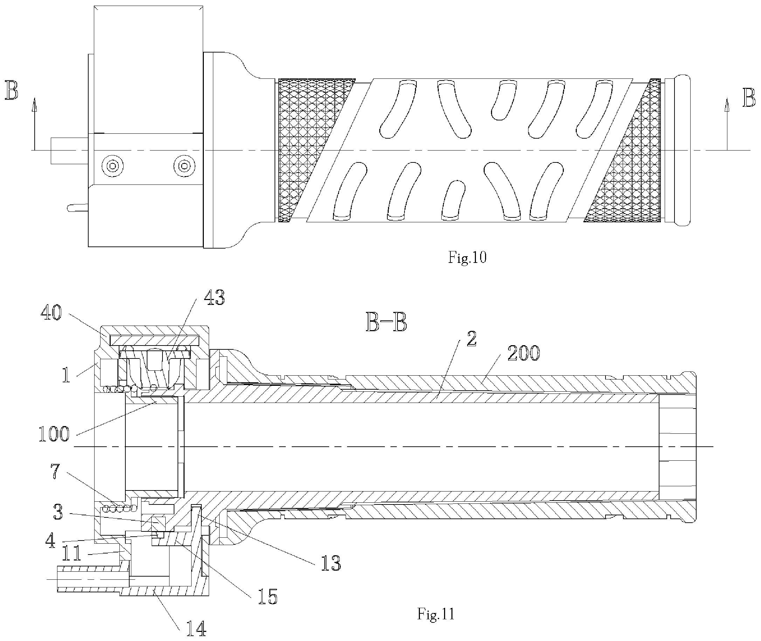

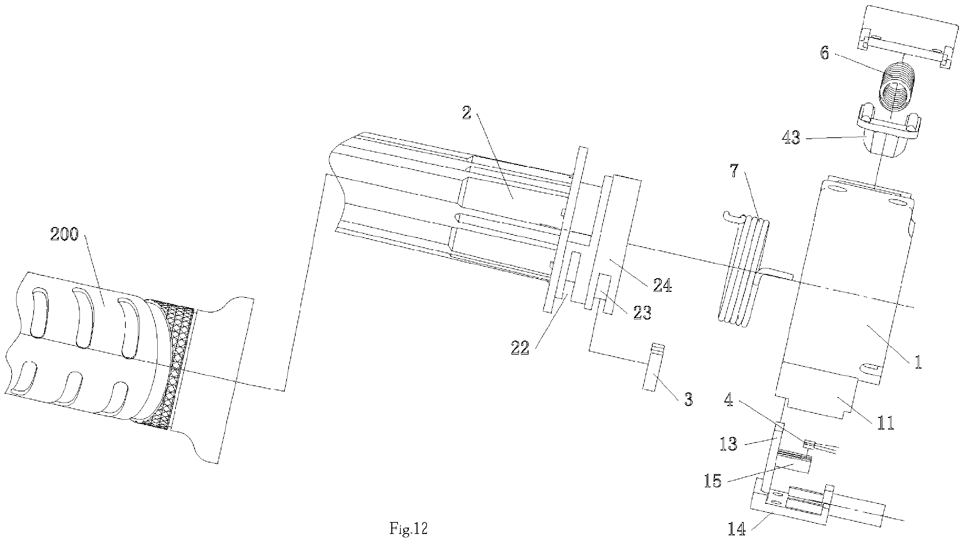

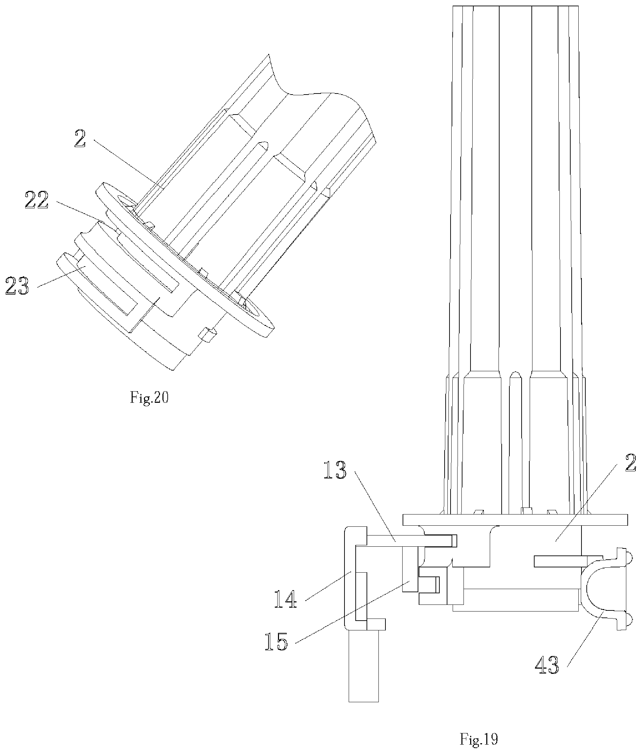

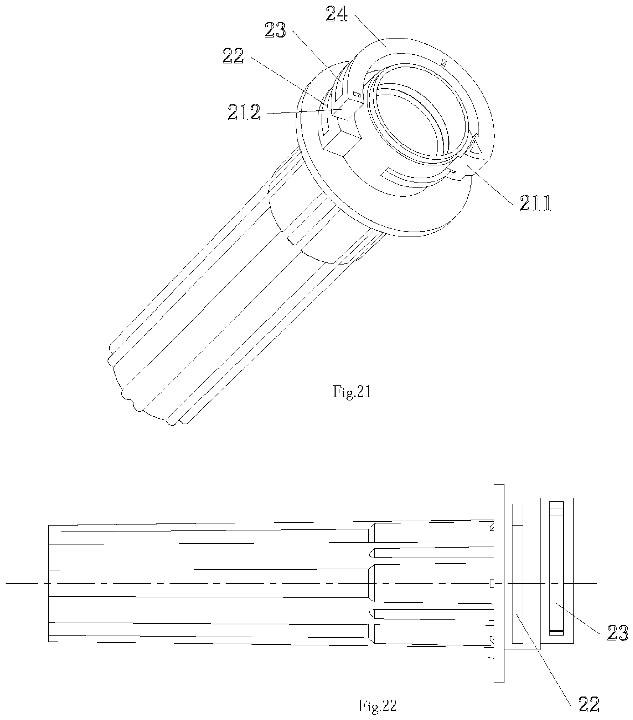

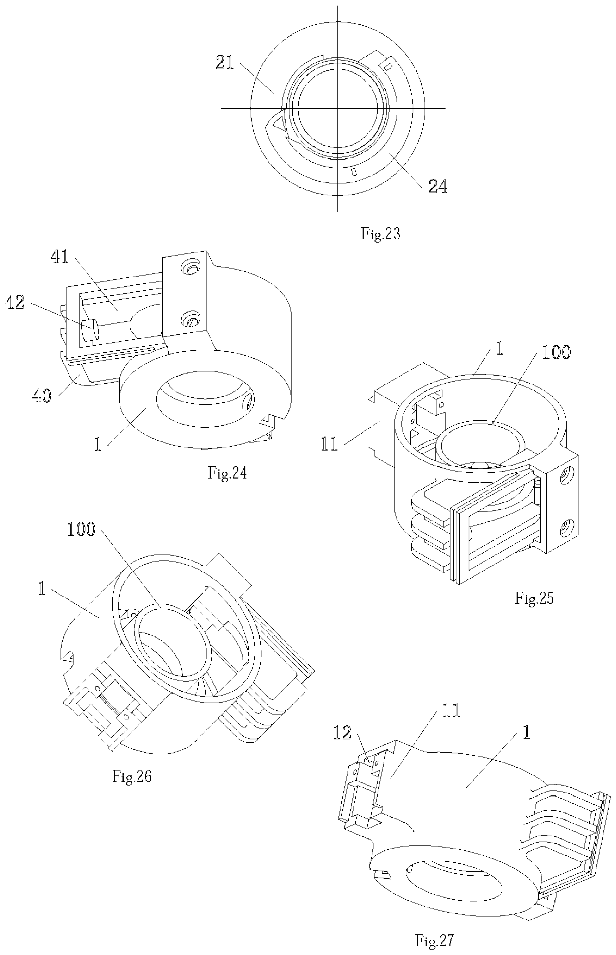

Referring to Figs. 10-27, according to a fourth preferred embodiment of the present invention, a forward and backward speed adjusting handle for electric vehicles comprises a handle bar 100, a fixing element formed by a handle base 1 mounted on the handle bar 100, a rotating handle rotatably provided on the handle bar 100, and a grip sleeve 200 sleeved onto the rotating handle 2.

An arch-shaped body 24 having a first arc groove 23, an arc position-limiting groove 22, and a second arc groove 21 are provided at an outer periphery of the rotating handle 2. The second arc groove 21 and the arc position-limiting groove 22 are both coaxial with the rotating handle, but at different sections of the rotating handle. The second arc groove 21 and the arc-shaped body 24 are at the same section of the rotating handle. The first arc groove 23 is for containing an arc-shaped permanent magnet 3. The arc-shaped permanent magnet 3 has a central angle of around 100°.

The arc position-limiting groove 22 has two inner end faces 221 and 222, wherein the two inner end faces 221 and 222 are at two ends along a circumferential direction of the rotating handle. The second arc groove 21 has two inner end faces 211 and 212 which are at two ends along the circumferential direction of the rotating handle. A spring seat 40 is provided on the handle base 1 along a tangent direction of the rotating handle; the spring seat 40 internally has a sliding groove 41 (spring cavity) arranged at a direction vertical to an axis of the rotating handle; a slider 43 is able to slide relative to the sliding groove; one end of the sliding groove is communicated with the second arc groove 21. A left-rotating spring (coiled compression spring) 6 is within the sliding groove; an axis of the left-rotating spring is vertical to the axis of the rotating handle; one end of the coiled compression spring is mounted at a protrusion 42 of the spring seat, and the other end of the coiled compression spring contacts the slider 43. At the other end of the sliding groove, distal to the protrusion 42, the handle base has a thrust surface (restricting element) 16 for restricting a maximal sliding distance of the slider relative to the spring seat. The two ends of the coiled compression spring are respectively biased against the protrusion 42 and the slider 43. When the rotating handle is in the reset position, the coiled compression spring drives a left-upper part of the slider to contact the thrust surface 16, and meanwhile the right-rotating spring drives the inner end face 211 of the second arc groove 21 to contact a left-lower part of the slider.

The inner end face 211 of the second arc groove 21 which contacts the slider is a curved surface. The curved surface has such a structure to satisfy that: when an external force is applied on the rotating handle, the rotating handle rotates clockwise away from the reset position; the inner end face 211 of the second arc groove 21 pushes the slider to move rightward against the resilience of the coiled compression spring, wherein contacting points between the curved surface and the slider are at the axis of the coiled compression spring. The slider is always tangent to the inner end face 211 of the second arc groove. Therefore, the inner end face 211 of the second arc groove always pushes the slider 43 to slide along the sliding groove in the direction of the axis of the coiled compression spring; the slider is protected from being turned by any force deviated from the direction of the axis of the coiled compression spring, which improves a smooth slide of the slider relative to the inner end face 211 of the second arc groove.

A clamping frame 11 extending in a radial direction of the rotating handle is provided on the handle base 1; the clamping frame 11 has a through-hole 12 running in the radial direction of the rotating handle. A position-limiting block 13 has a distal end, relative to the axis of the rotating handle, mounted on a through-hole cover 14. A side of the position-limiting block 13 is connected to a sensor seat 15; the Hall effect sensor 4 is mounted on the sensor seat 15.

The through-hole cover 14 is detachably connected to the clamping frame 11 through screws. The position-limiting block and the sensor seat cross through the through-hole. The position-limiting block 13 has a proximal end, relative to the axis of the rotating handle, inserted into the arc position-limiting groove. When the rotating handle rotates counter-clockwise at a maximal angle away from the reset position under the external force, the position-limiting block 13 and the inner end face 221 of the arc position-limiting groove contact the rotating handle, and forbid the rotating handle to rotate counter-clockwise any further. When the rotating handle rotates clockwise at a maximal angle away from the reset position under the external force, the position-limiting block and the inner end face 222 of the arc position-limiting groove contact the rotating handle, and forbid the rotating handle to rotate clockwise any further. The arc position-limiting groove and the position-limiting block form a position-limiting device.

The Hall effect sensor 4, mounted on the sensor seat, and the arc-shaped permanent magnet 4 face against each other in the radial direction of the rotating handle.

The right-rotating spring is a torsion spring 7 whose one end is mounted on an end face of the rotating handle and the other end is mounted on the handle base facing against the end face of the rotating handle. The coiled compression spring 6 and the torsion spring 7 have such stiffness that an external force for rotating the rotating handle counter-clockwise away from the reset position is smaller than an external force for rotating the rotating handle clockwise away from the reset position.

The Hall effect sensor has a wiring harness consisting of three wires, wherein two are power supply wires for supplying the Hall effect sensor with a voltage around DC5V and one is a position signal output wire. When the arc-shaped permanent magnet moves to the different positions relative to the Hall effect sensor, an output signal of the position signal output wire of the Hall effect sensor is at a range of 0.8V-4.3V.

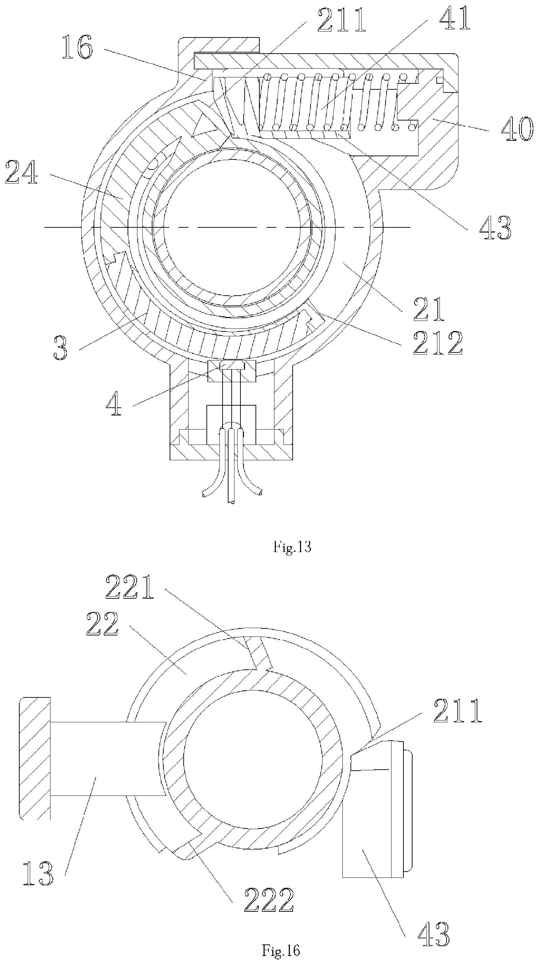

The coiled compression spring 6 pushes the inner end face 211 of the second arc groove through the slider, so as to drive the rotating handle to rotate counter-clockwise relative to the handle bar. The torsion spring 7 drives the rotating handle to rotate clockwise relative to the handle bar. Because a leftward resilience of the coiled compression spring 6 on the slider is larger than a rightward action force of the torsion spring on the slider, in the reset position as showed in Figs. 13 and 16, an upper part of a left end of the slider is in contact with the thrust surface, and the torsion spring leads the inner end face 211 of the second arc groove to contact a lower part of the left end of the slider. When the rotating handle is in the reset position, the Hall effect sensor outputs a DC1.5V signal as a reference signal to a controller.

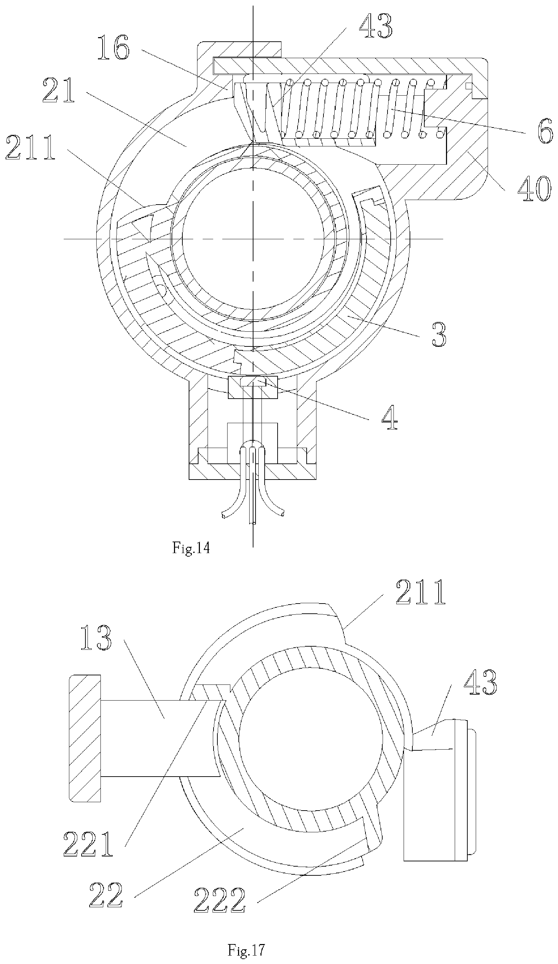

In order to rotate the rotating handle counter-clockwise, a counter-clockwise torque (external force) is applied onto the rotating handle; and then the rotating handle rotates counter-clockwise against a force of the torsion spring, wherein the slider is in contact with the thrust surface under the effect of the coiled compression spring 6 and thus unable to move leftward. Therefore, the inner end face 211 of the second arc groove is detached from the slider; by continuing rotating the rotating handle counter-clockwise until the position-limiting block contacts the inner end face 221 of the arc position-limiting groove, the rotating handle is rotated at the maximal angle, as showed in Figs. 14 and 17. With a rotation angle of the rotating handle which is rotating counter-clockwise (relative to the reset position) increases, the arc-shaped permanent magnet gradually moves (rotating counter-clockwise) relative to the Hall effect sensor, and the output signal of the Hall effect sensor gradually increases from 1.5V. When the rotating handle is unable to rotate counter-clockwise any further, the Hall effect sensor is at a left end of the arc magnetic steel, and the output signal of the Hall effect sensor reaches a maximum of 4.3V. When the external force for rotating the rotating handle counter-clockwise is canceled, under the effect of the torsion spring, the rotating handle rapidly rotates clockwise; when the inner end face 211 of the second arc groove contacts the slider, the rotating handle recovers to be in the reset position and stops rotating.

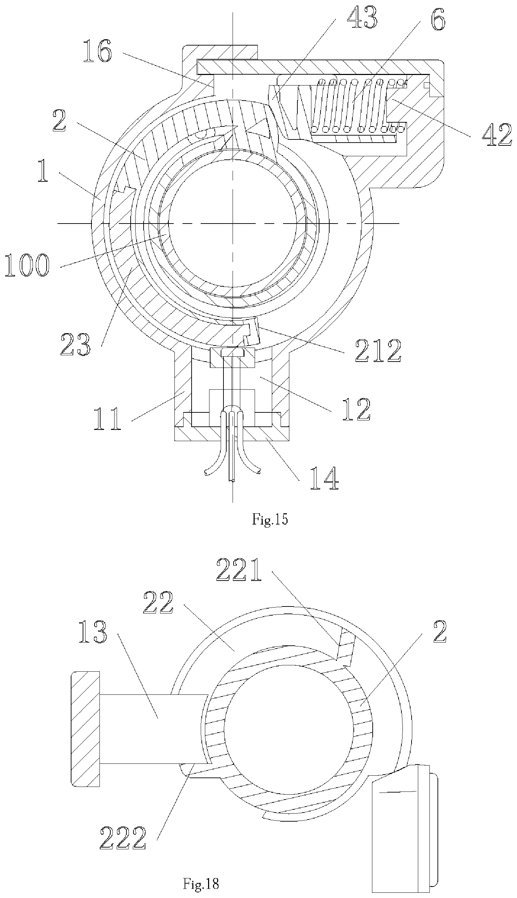

In order to rotate the rotating handle clockwise, a clockwise torque (external force) is applied on the rotating handle, and the inner end face 221 of the arc position-limiting groove pushes the slider. As a result, the slider moves rightward against a resilience of the coiled compression spring, in such a manner that the coiled compression spring 6 is gradually compressed. When the position-limiting block contacts the inner end face 222 of the arc position-limiting groove, the rotating handle is rotated clockwise at the maximal angle, as showed in Figs. 15 and 18; and meanwhile, the inner end face 211 of the second arc groove always contacts the slider under the effect of the torsion spring. With the rotation angle of the rotating handle which is rotating clockwise (relative to the reset position) increases, the arc-shaped permanent magnet gradually moves (rotating clockwise) relative to the Hall effect sensor, and the output signal of the Hall effect sensor gradually decreases from 1.5V. When the rotating handle is unable to rotate clockwise any further, the Hall effect sensor is at a right end of the arc magnetic steel, and the output signal of the Hall effect sensor reaches a minimum of 0.8V. When the external force for rotating the rotating handle clockwise is canceled, the coiled compression spring 6 pushes the slider to move leftward, and the slider pushes the inner end face 211 of the second arc groove. Thus, the rotating handle rapidly rotates counter-clockwise; when the slider contacts the thrust surface again, the rotating handle is stabilized in the reset position.

### Fifth preferred embodiment

Compared with the fourth preferred embodiment, a fifth preferred embodiment excludes the thrust surface (restricting element) for restricting the maximal sliding distance of the slider relative to the spring seat. In other words, in the fifth preferred embodiment, the slider is able to slide leftward and rightward freely without restriction. Referring to Figs. 13-18, the fifth preferred embodiment has the following operations.

The coiled compression spring 6 pushes the inner end face 211 of the second arc groove through the slider, in such a manner that the rotating handle is rotated counter-clockwise relative to the handle bar. The torsion spring 7 drives the rotating handle to rotate clockwise relative to the handle bar. Under the effect of both the left-rotating spring and the right-rotating spring, the rotating handle is in the reset position, as showed in Figs. 13 and 16. When the rotating handle is in the reset position, the Hall effect sensor outputs the DC1.5V signal as the reference signal to the controller.

In order to rotate the rotating handle counter-clockwise, the counter-clockwise torque (external force) is applied onto the rotating handle, and then the rotating handle rotates counter-clockwise against the force of the torsion spring, wherein the slider gradually moves leftward under the effect of the coiled compression spring 6. By continuing rotating the rotating handle counter-clockwise, the resilience of the coiled compression spring 6 is gradually released (recovering from a compressed state to a natural state without compression). When the coiled compression spring 6 recovers the natural state, the slider stops moving. By continuing rotating the rotating handle counter-clockwise until the position-limiting block contacts the inner end face 221 of the arc position-limiting groove, the rotating handle is rotated counter-clockwise at the maximal angle, as showed in Figs. 14 and 17. With the rotation angle of the rotating handle which is rotating counter-clockwise (relative to the reset position) increases, the arc-shaped permanent magnet gradually moves (rotating counter-clockwise) relative to the Hall effect sensor, and the output signal of the Hall effect sensor gradually increases from 1.5V. When the rotating handle is unable to rotate counter-clockwise any further, the Hall effect sensor is at the left end of the arc magnetic steel, and the output signal of the Hall effect sensor reaches the maximum of 4.3V. When the external force for rotating the rotating handle counter-clockwise is canceled, under the effect of the torsion spring, the rotating handle rapidly rotates clockwise. After the inner end face 211 of the second arc groove contacts the slider, the slider is pushed by the rotating handle to move rightward, thereby compressing the coiled compression spring. When an action force on the slider by the coiled compression spring is equal to an action force on the slider by the torsion spring, the rotating handle is stabilized in the reset position.

In order to rotate the rotating handle clockwise, the clockwise torque (external force) is applied onto the rotating handle, and then the inner end face 221 of the arc position-limiting groove pushes the slider, in such a manner that the slider moves rightward against the resilience of the coiled compression spring and the coiled compression spring 6 is gradually compressed. When the position-limiting block contacts the inner end face 222 of the arc position-limiting groove, the rotating handle is rotated clockwise at the maximal angle, as showed in Figs. 15 and 18. With the rotation angle of the rotating handle which is rotating clockwise (relative to the reset position) increases, the arc-shaped permanent magnet gradually moves relative to the Hall effect sensor (rotating clockwise), and the output signal of the Hall effect sensor gradually decreases from 1.5V. When the rotating handle is unable to rotate clockwise any further, the Hall effect sensor is at the right end of the arc magnetic steel, and the output signal of the Hall effect sensor reaches the minimum of 0.8V. When the external force for rotating the rotating handle clockwise is canceled, the coiled compression spring 6 pushes the slider to move leftward, and then the slider pushes the inner end face 211 of the second arc groove. As a result, the rotating handle rapidly rotates counter-clockwise. When the action force on the slider by the coiled compression spring is equal to the action force on the slider by the torsion spring, the rotating handle is stabilized in the reset position.

The present invention discloses the forward and backward speed adjusting handle for the electric vehicles. When the rotating handle is in the reset position, the Hall effect sensor is close to the arc magnetic steel at some position between the two ends of the arc magnetic steel. When the rotating handle rotates forward or backward, the Hall effect sensor remains stationary while the arc magnetic steel rotates, thereby changing the output signal of the Hall effect sensor. The output signal is outputted into the controller which controls changes in a value and a direction of the torque of the motor according to the output signal. When the rotating handle is no longer able to rotate clockwise or counter-clockwise, the Hall effect sensor is close to the arc magnetic steel at one of the two ends of the arc magnetic steel. When the rotating handle is loosened, the arc magnetic steel returns to the reset position under the effect of the springs.

The forward and backward speed adjusting handle of the present invention adjusts speed forward and backward, omits a reversing switch in conventional electric vehicles, enhances product reliability and reduces costs.

## Claims

1. An electric vehicle forward and backward speed adjusting handle, the forward and backward speed adjusting handle comprising: a handle bar (100), a fixing element consisting of a handle base (1) mounted on the handle bar (100), and a rotating handle (2) rotatably provided on the handle bar (100), a left-rotating spring (6) and a right-rotating spring (7) are provided between the fixing element and the rotating handle (2); the left-rotating spring (6) enables the rotating handle (2) to rotate counter-clockwise with respect to the handle bar (100), and the right-rotating spring (7) enables the rotating handle (2) to rotate clockwise with respect to the handle bar (100); under the effect of both the left-rotating spring (6) and the right-rotating spring (7), the rotating handle (2) is in a reset position; when an external force is applied on the rotating handle, the rotating handle can rotate clockwise or counter-clockwise from the reset position; **characterized by**
a Hall effect sensor (4) and an arc-shaped permanent magnet (3) are oppositely arranged separately on the rotating handle (2) and the fixing element without touching one another; such that when the rotating handle (2) rotates, the Hall effect sensor (4) moves relatively to the arc-shaped permanent magnet (3), detects the different positions of the arc-shaped permanent magnet (3), and outputs corresponding different signals, and configured so that when the rotating handle is rotated clockwise or counter-clockwise, the Hall effect sensor is stationary and when the rotating handle is no longer able to rotate clockwise or counter-clockwise, the Hall effect sensor is close to the arc-shaped permanent magnet at one of two ends thereof and when the rotating handle is loosened, the arc-shaped permanent magnet returns to the reset position under the effect of the left-rotating spring and the right-rotating spring at a position between the two ends, the output signal is outputted into a controller which controls changes in a value and a direction of the torque of a motor according to the output signal.

2. The electric vehicle forward and backward speed adjusting handle, as recited in claim 1, wherein an outer periphery of the rotating handle (2) has an arc groove (21) coaxial with the rotating handle (2); two inner end faces of the arc groove (21) are at two ends in a circumferential direction of the rotating handle (2); a spring seat (40) is provided on the handle base (1), and the left-rotating spring (6) is a coiled compression spring; an axis of the coiled compression spring is vertical to an axis of the rotating handle (2);
one end of the coiled compression spring (6) is biased against the spring eat (40), and the other end of the coiled compression spring (6) contacts with one of the two inner end faces of the arc groove (21),
the handle base (1) has a sliding groove (41) arranged along a direction of the axis of the coiled compression spring, and a slider (43) is slidably provided within the sliding groove (41); the sliding groove (41) is communicated with the arc groove (21); a restricting element (16), for restricting a maximal sliding distance of the slider (43) relative to the spring seat (13), is provided within the sliding groove (41); two ends of the coiled compression spring are respectively biased against the spring seat (40) and the slider (43); when the rotating handle (2) is in the reset position, the left-rotating spring (6) drives the slider (43) to contact the restricting element (16), and the right-rotating spring (7) drives a first inner end face of the arc groove (21) to contact the slider (43);
the first inner end face of the arc groove (21) which contacts the slider (43) is a curved surface; when an external force is applied on the rotating handle (2), the rotating handle (2) is rotated, and then the first inner end face of the arc groove (21) pushes the slider (43) to move; the curved surface contacts the slider (43) at contacting points which are at the axis of the coiled compression spring.

3. The electric vehicle forward and backward speed adjusting handle, as recited in claim 1, **characterized in that**: the arc-shaped permanent magnet (3) is coaxial with the rotating handle (2); one of the arc-shaped permanent magnet (3) and the Hall effect sensor (4) is provided on an end face of the rotating handle (2), and the other one of the arc-shaped permanent magnet (3) and the Hall effect sensor (4) is provided on the handle base (1); the Hall effect sensor (4) and the arc-shaped permanent magnet (3) face against each other in a direction parallel with an axis of the rotating handle (2).

4. The electric vehicle forward and backward speed adjusting handle, as recited in claim 1, **characterized in that**: the arc-shaped permanent magnet (3) is coaxial with the rotating handle (2); one of the arc-shaped permanent magnet (3) and the Hall effect sensor (4) is provided at an outer periphery of the rotating handle (2), and the other one of the arc-shaped permanent magnet (3) and the Hall effect sensor (4) is provided on the handle base (1); the Hall effect sensor (4) and the arc-shaped permanent magnet (3) face against each other in a direction vertical to an axis of the rotating handle (2).

5. The electric vehicle forward and backward speed adjusting handle, as recited in claim 1, 2 or 3, **characterized in that**: the left-rotating spring (6) and the right-rotating spring (7) have such a stiffness that the external force for rotating the rotating handle (2) counter-clockwise away from the reset position is smaller than the external force for rotating the rotating handle (2) clockwise away from the reset position.

6. The electric vehicle forward and backward speed adjusting handle, as recited in claim 1, **characterized in** further comprising a position-limiting device for restricting a maximal angle at which the rotating handle is able to rotate counter-clockwise away from the reset position and a maximal angle at which the rotating handle (2) is able to rotate clockwise away from the reset position.

7. The electric vehicle forward and backward speed adjusting handle, as recited in claim 6, **characterized in that**: the position-limiting device comprises an arc position-limiting groove (22) and a position-limiting block (13); the outer periphery of the rotating handle (2) has the arc position-limiting groove (22) which is coaxial with the rotating handle (2); two inner end faces of the arc position-limiting groove (22) are at two ends in the circumferential direction of the rotating handle (2); the position-limiting block (13) which is inserted into the arc position-limiting groove (22) in a radial direction of the rotating handle (2) is provided on the handle base (1); when the rotating handle (2) is rotated counter-clockwise away from the reset position at the maximal angle under the external force, the position-limiting block (13) contacts one inner end face (221) of the arc position-limiting groove (22), thereby forbidding the rotating handle (2) to rotate counter-clockwise; when the rotating handle (2) is rotated clockwise away from the reset position at the maximal angle under the external force, the position-limiting block (13) contacts the other inner end face (222) of the arc position-limiting groove (22), thereby forbidding the rotating handle (2) to rotate clockwise.

8. The electric vehicle forward and backward speed adjusting handle, as recited in claim 7, **characterized in that**: the handle base (1) has a through-hole in the radial direction of the rotating handle (2); the position- limiting block (13) is detachably connected to the through-hole (12), and runs into the arc position- limiting groove (22) through the through-hole (12).

9. The electric vehicle forward and backward speed adjusting handle, as recited in claim 8, **characterized in that**: the arc-shaped permanent magnet (3) is provided at the outer periphery of the rotating handle (2); the arc-shaped permanent magnet (3) and the arc position-limiting groove (22) are at different sections of the rotating handle (2); a sensor seat (15) is connected to the position-limiting block (13), and the Hall effect sensor (4) is mounted on the sensor seat (15); the position-limiting block (13) and the sensor seat (15) cross through the through-hole (12); the Hall effect sensor (4) and the arc-shaped permanent magnet (3) face against each other in a direction vertical to the axis of the rotating handle (2).

10. The electric vehicle forward and backward speed adjusting handle, as recited in claim 1, 2 or 3, **characterized in that**: a boss (22) is provided at an end face of the rotating handle (2), and the handle base (1) has a circular groove (11) where the boss (22) is inserted; the circular groove (11) is coaxial with the rotating handle (2); a slider (5) which is able to slide around an axis of the circular groove (11) along the circular groove (11) is provided within the circular groove (11); the left-rotating spring (6), for pushing the slider (5) to move counter-clockwise within the circular groove (11), is provided between the slider (5) and a spring seat (13) on a bottom of the circular groove (11); a reversed position-limiting barrier (14), for restricting a limit position to which the slider (5) is able to move counter-clockwise within the circular groove (11), is provided at a lateral wall of the circular groove (11); when the rotating handle (2) is in the reset position, the left-rotating spring (6) drives the slider (5) to contact the reversed position-limiting barrier (14), and the right-rotating spring (7) drives the boss (22) to contact the slider (5).

11. The electric vehicle forward and backward speed adjusting handle, as recited in claim 10, **characterized in that**: a forward position-limiting barrier (12) is provided on the bottom of the circular groove; when the rotating handle (2) is rotated counter-clockwise away from the reset position at a certain angle under the external force, the forward position-limiting barrier (12) contacts the rotating handle (2), thereby forbidding the rotating handle (2) to rotate counter-clockwise; the certain angle is a maximal angle at which the rotating handle (2) is able to rotate counter-clockwise away from the reset position under the external force.

12. An electric vehicle, **characterized in** comprising: a controller for controlling a motor which drives the electric vehicle and the electric vehicle forward and backward speed adjusting handle, as recited in any preceding claim, wherein: the controller is electrically connected to the Hall effect sensor (4); the controller receives an output signal of the Hall effect sensor (4), and controls the motor to output a counter-clockwise torque or a clockwise torque according to different output signals of the Hall effect sensor (4).

13. The electric vehicle, as recited in claim 12, **characterized in that**: when the rotating handle (2) is in the reset position, the output signal of the Hall effect sensor (4) is a reference signal T; given that the output signal of the Hall effect sensor (4) when the rotating handle (2) is at some position is R, the motor outputs no torque when T+T^{∗}5%≥R≥T-T^{∗}5%; a direction of the torque outputted by the motor when R>T+T^{∗}5% is opposite to a direction of the torque outputted by the motor when R<T-T^{∗}5%, a value of the torque outputted by the motor when R>T+T^{∗}5% increases along with R-(T+T^{∗}5%) increases; a value of the torque outputted by the motor when R<T-T^{∗}5% increase along with (T-T^{∗}5%)-R increases.

## Patentansprüche

1. Einstellgriff für die Vorwärts- und Rückwärtsgeschwindigkeit eines Elektrofahrzeugs, wobei der Einstellgriff für die Vorwärts- und Rückwärtsgeschwindigkeit aufweist: eine Griffstange (100), ein Befestigungselement, bestehend aus einer an der Griffstange (100) angebrachten Griffbasis (1), und einen drehbar an der Griffstange (100) vorgesehenen Drehgriff (2), wobei eine linksdrehende Feder (6) und eine rechtsdrehende Feder (7) zwischen dem Befestigungselement und dem Drehgriff (2) vorgesehen sind; die linksdrehende Feder (6) es dem Drehgriff (2) ermöglicht, sich in Bezug auf die Griffstange (100) gegen den Uhrzeigersinn zu drehen, und die rechtsdrehende Feder (7) es dem Drehgriff (2) ermöglicht, sich in Bezug auf die Griffstange (100) im Uhrzeigersinn zu drehen; unter der Wirkung sowohl der linksdrehenden Feder (6) als auch der rechtsdrehenden Feder (7) sich der Drehgriff (2) in einer Rückstellposition befindet; wenn eine externe Kraft auf den Drehgriff ausgeübt wird, sich der Drehgriff aus der Rückstellposition im oder gegen den Uhrzeigersinn drehen kann;
**gekennzeichnet durch**
einen Hall-Effekt-Sensor (4) und einen bogenförmigen Permanentmagneten (3), die getrennt voneinander an dem Drehgriff (2) und dem Befestigungselement gegenüberliegend angeordnet sind, ohne einander zu berühren, sodass, wenn sich der Drehgriff (2) dreht, der Hall-Effekt-Sensor (4) sich relativ zum bogenförmigen Permanentmagneten (3) bewegt, die verschiedenen Positionen des bogenförmigen Permanentmagneten (3) detektiert und entsprechende unterschiedliche Signale ausgibt, und so eingerichtet sind, dass, wenn der Drehgriff im oder gegen den Uhrzeigersinn gedreht wird, der Hall-Effekt-Sensor stationär ist, und wenn der Drehgriff nicht länger imstande ist, sich im oder gegen den Uhrzeigersinn zu drehen, sich der Hall-Effekt-Sensor in der Nähe eines der beiden Enden des bogenförmigen Permanentmagneten befindet, und wenn der Drehgriff gelöst wird, der bogenförmige Permanentmagnet unter der Wirkung der linksdrehenden Feder und der rechtsdrehenden Feder in die Rückstellposition an eine Position zwischen den beiden Enden zurückkehrt, wobei das Ausgangssignal in eine Steuereinheit ausgegeben wird, die Änderungen eines Betrags und einer Richtung des Drehmoments eines Motors gemäß dem Ausgangssignal steuert.

2. Einstellgriff für die Vorwärts- und Rückwärtsgeschwindigkeit eines Elektrofahrzeugs nach Anspruch 1, bei dem ein Außenumfang des Drehgriffs (2) eine bezüglich des Drehgriffs (2) koaxiale Bogennut (21) aufweist; wobei sich zwei innere Endflächen der Bogennut (21) an zwei Enden in Umfangsrichtung des Drehgriffs (2) befinden; ein Federsitz (40) an der Griffbasis (1) vorgesehen ist und die linksdrehende Feder (6) eine Spiraldruckfeder ist; eine Achse der Spiraldruckfeder senkrecht zu einer Achse des Drehgriffs (2) verläuft; ein Ende der Spiraldruckfeder (6) gegen den Federsitz (40) vorgespannt ist, und das andere Ende der Spiraldruckfeder (6) mit einem der beiden inneren Endflächen der Bogennut (21) in Kontakt steht; die Griffbasis (1) eine Gleitnut (41) aufweist, die entlang einer Richtung der Achse der Spiraldruckfeder angeordnet ist, und ein Schieber (43) gleitend in der Gleitnut (41) vorgesehen ist; die Gleitnut (41) mit der Bogennut (21) in Kommunikation steht; ein Begrenzungselement (16) zum Begrenzen einer maximalen Gleitstrecke des Schiebers (43) relativ zum Federsitz (13) in der Gleitnut (41) vorgesehen ist; zwei Enden der Spiraldruckfeder entsprechend gegen den Federsitz (40) und den Schieber (43) vorgespannt sind; wenn sich der Drehgriff (2) in der Rückstellposition befindet, die linksdrehende Feder (6) den Schieber (43) betätigt, um mit dem Begrenzungselement (16) in Kontakt zu kommen, und die rechtsdrehende Feder (7) eine erste innere Endfläche der Bogennut (21) betätigt, um mit dem Schieber (43) in Kontakt zu kommen; die erste innere Endfläche der Bogennut (21), die mit dem Schieber (43) in Kontakt steht, eine gekrümmte Oberfläche ist; wenn eine äußere Kraft auf den Drehgriff (2) ausgeübt wird, der Drehgriff (2) gedreht wird und dann die erste innere Endfläche der Bogennut (21) den Schieber (43) drückt, um sich zu bewegen; die gekrümmte Oberfläche mit dem Schieber (43) an Kontaktpunkten, die sich auf der Achse der Spiraldruckfeder befinden, in Kontakt steht.

3. Einstellgriff für die Vorwärts- und Rückwärtsgeschwindigkeit eines Elektrofahrzeugs nach Anspruch 1, **dadurch gekennzeichnet, dass** der bogenförmige Permanentmagnet (3) koaxial zum Drehgriff (2) vorgesehen ist; der bogenförmige Permanentmagnete (3) oder der Hall-Effekt-Sensor (4) an einer Endfläche des Drehgriffs (2) vorgesehen ist und der andere, bezugnehmend auf den bogenförmigen Permanentmagneten (3) und den Hall-Effekt-Sensor (4), an der Griffbasis (1) vorgesehen ist; der Hall-Effekt-Sensor (4) und der bogenförmige Permanentmagnet (3) in einer Richtung parallel zu einer Achse des Drehgriffs (2) einander zugewandt sind.

4. Einstellgriff für die Vorwärts- und Rückwärtsgeschwindigkeit eines Elektrofahrzeugs nach Anspruch 1, **dadurch gekennzeichnet, dass** der bogenförmige Permanentmagnet (3) koaxial zum Drehgriff (2) vorgesehen ist; der bogenförmige Permanentmagnet (3) oder der Hall-Effekt-Sensor (4) an einem Außenumfang des Drehgriffs (2) vorgesehen ist und der andere, bezugnehmend auf den bogenförmigen Permanentmagneten (3) und den Hall-Effekt-Sensor (4), an der Griffbasis (1) vorgesehen ist; der Hall-Effekt-Sensor (4) und der bogenförmige Permanentmagnet (3) in einer Richtung senkrecht zu einer Achse des Drehgriffs (2) einander zugewandt sind.

5. Einstellgriff für die Vorwärts- und Rückwärtsgeschwindigkeit eines Elektrofahrzeugs nach Anspruch 1, 2 oder 3, **dadurch gekennzeichnet, dass** die linksdrehende Feder (6) und die rechtsdrehende Feder (7) eine solche Härte aufweisen, dass die äußere Kraft zum Drehen des Drehgriffs (2) aus der Rückstellposition heraus gegen den Uhrzeigersinn kleiner ist als die äußere Kraft zum Drehen des Drehgriffs (2) aus der Rückstellposition heraus im Uhrzeigersinn.

6. Einstellgriff für die Vorwärts- und Rückwärtsgeschwindigkeit eines Elektrofahrzeugs nach Anspruch 1, **dadurch gekennzeichnet, dass** dieser ferner eine Positionsbegrenzungseinrichtung zur Begrenzung bezüglich eines maximalen Winkels, um den sich der Drehgriff von der Rückstellposition gegen den Uhrzeigersinn wegdrehen kann, und eines maximalen Winkels, um den sich der Drehgriff (2) von der Rückstellposition im Uhrzeigersinn wegdrehen kann, umfasst.

7. Einstellgriff für die Vorwärts- und Rückwärtsgeschwindigkeit eines Elektrofahrzeugs nach Anspruch 6, **dadurch gekennzeichnet, dass** die Positionsbegrenzungseinrichtung eine Bogenpositions-Begrenzungsnut (22) und einen Positionsbegrenzungsblock (13) aufweist; der Außenumfang des Drehgriffs (2) die Bogenpositions-Begrenzungsnut (22) aufweist, die koaxial zum Drehgriff (2) vorgesehen ist; zwei innere Endflächen der Bogenpositions-Begrenzungsnut (22) sich in Umfangsrichtung an zwei Enden des Drehgriffs (2) befinden; der Positionsbegrenzungsblock (13), der in radialer Richtung des Drehgriffs (2) in die Bogenpositions-Begrenzungsnut (22) eingesetzt ist, an der Griffbasis (1) vorgesehen ist; wenn der Drehgriff (2) unter der äußeren Kraft um den maximalen Winkel gegen den Uhrzeigersinn aus der Rückstellposition weggedreht wird, der Positionsbegrenzungsblock (13) mit einer inneren Endfläche (221) der Bogenpositions-Begrenzungsnut (22) in Kontakt kommt, wodurch eine Drehung des Drehgriffs (2) gegen den Uhrzeigersinn unterbunden wird; wenn der Drehgriff (2) unter der äußeren Kraft um den maximalen Winkel im Uhrzeigersinn aus der Rückstellposition weggedreht wird, der Positionsbegrenzungsblock (13) mit der anderen inneren Endfläche (222) der Bogenpositions-Begrenzungsnut (22) in Kontakt kommt, wodurch eine Drehung des Drehgriffs (2) im Uhrzeigersinn unterbunden wird.

8. Einstellgriff für die Vorwärts- und Rückwärtsgeschwindigkeit eines Elektrofahrzeugs nach Anspruch 7, **dadurch gekennzeichnet, dass** die Griffbasis (1) eine Durchgangsöffnung in radialer Richtung des Drehgriffs (2) aufweist; der Positionsbegrenzungsblock (13) lösbar mit der Durchgangsöffnung (12) verbunden ist und durch die Durchgangsöffnung (12) in die Bogenpositions-Begrenzungsnut (22) verläuft.

9. Einstellgriff für die Vorwärts- und Rückwärtsgeschwindigkeit eines Elektrofahrzeugs nach Anspruch 8, **dadurch gekennzeichnet, dass** der bogenförmige Permanentmagnet (3) am Außenumfang des Drehgriffs (2) vorgesehen ist; der bogenförmige Permanentmagnet (3) und die bogenförmige Positionsbegrenzungsnut (22) sich an verschiedenen Abschnitten des Drehgriffs (2) befinden; ein Sensorsitz (15) mit dem Positionsbegrenzungsblock (13) verbunden ist, und der Hall-Effekt-Sensor (4) auf dem Sensorsitz (15) montiert ist; der Positionsbegrenzungsblock (13) und der Sensorsitz (15) die Durchgangsöffnung (12) durchqueren; der Hall-Effekt-Sensor (4) und der bogenförmige Permanentmagnet (3) in einer Richtung senkrecht zur Achse des Drehgriffs (2) einander zugewandt sind.

10. Einstellgriff für die Vorwärts- und Rückwärtsgeschwindigkeit eines Elektrofahrzeugs nach Anspruch 1, 2 oder 3, **dadurch gekennzeichnet, dass** ein Vorsprung (22) an einer Endfläche des Drehgriffs (2) vorgesehen ist und die Griffbasis (1) eine kreisförmige Nut (11) aufweist, in die der Vorsprung (22) eingesetzt ist; die kreisförmige Nut (11) koaxial zum Drehgriff (2) vorgesehen ist; ein Schieber (5), der imstande ist, um eine Achse der kreisförmigen Nut (11) entlang der kreisförmigen Nut (11) zu gleiten, in der kreisförmigen Nut (11) vorgesehen ist; die linksdrehende Feder (6) zum Drücken des Schiebers (5), um sich gegen den Uhrzeigersinn in der kreisförmigen Nut (11) zu bewegen, zwischen dem Schieber (5) und einem Federsitz (13) auf einem Boden der kreisförmigen Nut (11) vorgesehen ist; eine Umkehrpositions-Begrenzungssperre (14) zum Begrenzen bezüglich einer Grenzposition, bis zu der sich der Schieber (5) gegen den Uhrzeigersinn in der kreisförmigen Nut (11) bewegen kann, an einer Seitenwand der kreisförmigen Nut (11) vorgesehen ist; wenn sich der Drehgriff (2) in der Rückstellposition befindet, die linksdrehende Feder (6) den Schieber (5) betätigt, um mit der Umkehrpositions-Begrenzungssperre (14) in Kontakt zu kommen, und die rechtsdrehende Feder (7) den Vorsprung (22) betätigt, um mit dem Schieber (5) in Kontakt zu kommen.

11. Einstellgriff für die Vorwärts- und Rückwärtsgeschwindigkeit eines Elektrofahrzeugs nach Anspruch 10, **dadurch gekennzeichnet, dass** eine Vorwärtsposition-Begrenzungssperre (12) am Boden der kreisförmigen Nut vorgesehen ist; wenn der Drehgriff (2) unter der äußeren Kraft um einen bestimmten Winkel gegen den Uhrzeigersinn aus der Rückstellposition weggedreht wird, die Vorwärtsposition-Begrenzungssperre (12) mit dem Drehgriff (2) in Kontakt kommt, wodurch verhindert wird, dass sich der Drehgriff (2) gegen den Uhrzeigersinn dreht; der bestimmte Winkel ein maximaler Winkel ist, um den der Drehgriff (2) unter der äußeren Kraft gegen den Uhrzeigersinn aus der Rückstellposition weggedreht werden kann.

12. Elektrofahrzeug, **dadurch gekennzeichnet, dass** es umfasst: eine Steuereinrichtung zum Steuern eines Motors, der das Elektrofahrzeug antreibt, und einen Einstellgriff für die Vorwärts- und Rückwärtsgeschwindigkeit des Elektrofahrzeugs gemäß einem der vorstehenden Ansprüche, wobei die Steuereinrichtung elektrisch mit dem Hall-Effekt-Sensor (4) verbunden ist; die Steuereinrichtung ein Ausgangssignal des Hall-Effekt-Sensors (4) empfängt und den Motor so steuert, dass dieser ein Drehmoment im Gegenuhrzeigersinn oder ein Drehmoment im Uhrzeigersinn entsprechend verschiedener Ausgangssignale des Hall-Effekt-Sensors (4) ausgibt.

13. Elektrofahrzeug nach Anspruch 12, **dadurch gekennzeichnet, dass**, wenn sich der Drehgriff (2) in der Rückstellposition befindet, das Ausgangssignal des Hall-Effekt-Sensors (4) ein Referenzsignal T ist; vorausgesetzt, dass das Ausgangssignal des Hall-Effekt-Sensors (4), wenn der Drehgriff (2) sich an irgendeiner Position befindet, R ist, der Motor kein Drehmoment ausgibt, wenn T+T^{∗}5%≥R≥T-T^{∗}5%; eine Richtung des vom Motor ausgegebenen Drehmoments, wenn R>T+T^{∗}5%, entgegengesetzt zu einer Richtung des vom Motor ausgegebenen Drehmoments ist, wenn R<T-T^{∗}5%, ein Betrag des vom Motor ausgegebenen Drehmoments, wenn R>T+T^{∗}5%, mit R-(T+T^{∗}5%) zunimmt; ein Betrag des vom Motor ausgegebenen Drehmoments, wenn R<T-T^{∗}5%, mit (T-T^{∗}5%)-R zunimmt.

## Revendications

1. Poignée de réglage de vitesse de marche avant et de marche arrière de véhicule électrique, la poignée de réglage de vitesse de marche avant et de marche arrière comprenant :
une barre de poignée (100), un élément de fixation constitué d'une base de poignée (1) montée sur la barre de poignée (100) et d'une poignée rotative (2) placée sur la barre de poignée (100) de manière à pouvoir tourner, un ressort à rotation à gauche (6) et un ressort à rotation à droite (7) sont placés entre l'élément de fixation et la poignée rotative (2) ; le ressort à rotation à gauche (6) permet à la poignée rotative (2) de tourner dans le sens inverse des aiguilles d'une montre par rapport à la barre de poignée (100), et le ressort à rotation à droite (7) permet à la poignée rotative (2) de tourner dans le sens des aiguilles d'une montre par rapport à la barre de poignée (100) ; sous l'effet à la fois du ressort à rotation à gauche (6) et du ressort à rotation à droite (7), la poignée rotative (2) se trouve dans une position de remise à l'état initial ; lorsqu'une force externe est appliquée sur la poignée rotative, la poignée rotative peut tourner dans le sens des aiguilles d'une montre ou dans le sens inverse des aiguilles d'une montre à partir de la position de remise à l'état initial ; **caractérisée en ce que** :
un capteur à effet Hall (4) et un aimant permanent en forme d'arc (3) sont agencés en regard l'un de l'autre et séparément sur la poignée rotative (2) et l'élément de fixation, sans se toucher ; de manière que lorsque la poignée rotative (2) tourne, le capteur à effet Hall (4) se déplace par rapport à l'aimant permanent en forme d'arc (3), détecte les différentes positions de l'aimant permanent en forme d'arc (3), et délivre en sortie différents signaux correspondants, et conçus de telle sorte que lorsque la poignée rotative est tournée dans le sens des aiguilles d'une montre ou dans le sens inverse des aiguilles d'une montre, le capteur à effet Hall soit fixe et que lorsque la poignée rotative ne peut plus tourner dans le sens des aiguilles d'une montre ou dans le sens inverse des aiguilles d'une montre, le capteur à effet Hall soit proche de l'aimant permanent en forme d'arc à l'une de ses deux extrémités et lorsque la poignée rotative est relâchée, l'aimant permanent en forme d'arc retourne à la position de remise à l'état initial sous l'effet du ressort à rotation à gauche et du ressort à rotation à droite, à une position située entre les deux extrémités, le signal de sortie est délivré à un dispositif de commande qui commande des changements de valeur et de direction du couple d'un moteur en fonction du signal de sortie.

2. Poignée de réglage de vitesse de marche avant et de marche arrière de véhicule électrique, telle qu'énoncée dans la revendication 1, dans laquelle une périphérie extérieure de la poignée rotative (2) présente une rainure en arc (21) coaxiale avec la poignée rotative (2) ; deux faces d'extrémités intérieures de la rainure en arc (21) se trouvent à deux extrémités dans une direction circonférentielle de la poignée rotative (2) ; un siège de ressort (40) est placé sur la base de poignée (1), et le ressort à rotation à gauche (6) est un ressort de compression hélicoïdal ; un axe du ressort de compression hélicoïdal est perpendiculaire à un axe de la poignée rotative (2) ; une extrémité du ressort de compression hélicoïdal (6) est sollicitée contre le siège de ressort (40) et l'autre extrémité du ressort de compression hélicoïdal (6) est au contact de l'une des deux faces d'extrémités intérieures de la rainure en arc (21), la base de poignée (1) présente une rainure de coulissement (41) disposée le long d'une direction de l'axe du ressort de compression hélicoïdal, et un coulisseau (43) est placé à l'intérieur de la rainure de coulissement (41) de manière à pouvoir coulisser ; la rainure de coulissement (41) communique avec la rainure en arc (21) ; un élément de limitation (16), destiné à limiter une distance maximale de coulissement du coulisseau (43) par rapport au siège de ressort (13), est placé à l'intérieur de la rainure de coulissement (41) ; deux extrémités du ressort de compression hélicoïdal sont sollicitées respectivement contre le siège de ressort (40) et le coulisseau (43) ; lorsque la poignée rotative (2) se trouve dans la position de remise à l'état initial, le ressort à rotation à gauche (6) entraîne le coulisseau (43) pour qu'il vienne au contact de l'élément de limitation (16), et le ressort à rotation à droite (7) entraîne une première face d'extrémité intérieure de la rainure en arc (21) pour qu'elle vienne au contact du coulisseau (43) ;
la première face d'extrémité intérieure de la rainure en arc (21) qui vient au contact du coulisseau (43) est une surface incurvée ; lorsqu'une force externe est appliquée sur la poignée rotative (2), la poignée rotative (2) est tournée, puis la première face d'extrémité intérieure de la rainure en arc (21) pousse le coulisseau (43) pour le déplacer ; la surface incurvée entre en contact avec le coulisseau (43) en des points de contact qui se situent dans l'axe du ressort de compression hélicoïdal.

3. Poignée de réglage de vitesse de marche avant et de marche arrière de véhicule électrique, telle qu'énoncée dans la revendication 1, **caractérisée en ce que** : l'aimant permanent en forme d'arc (3) est coaxial avec la poignée rotative (2) ; l'un de l'aimant permanent en forme d'arc (3) ou du capteur à effet Hall (4) est placé sur une face d'extrémité de la poignée rotative (2), et l'autre de l'aimant permanent en forme d'arc (3) ou du capteur à effet Hall (4) est placé sur la base de poignée (1) ; le capteur à effet Hall (4) et l'aimant permanent en forme d'arc (3) sont en regard l'un de l'autre dans une direction parallèle à un axe de la poignée rotative (2).

4. Poignée de réglage de vitesse de marche avant et de marche arrière de véhicule électrique, telle qu'énoncée dans la revendication 1, **caractérisée en ce que** : l'aimant permanent en forme d'arc (3) est coaxial avec la poignée rotative (2) ; l'un de l'aimant permanent en forme d'arc (3) ou du capteur à effet Hall (4) est placé à une périphérie extérieure de la poignée rotative (2), et l'autre de l'aimant permanent en forme d'arc (3) ou du capteur à effet Hall (4) est placé sur la base de poignée (1) ; le capteur à effet Hall (4) et l'aimant permanent en forme d'arc (3) sont en regard l'un de l'autre dans une direction perpendiculaire à un axe de la poignée rotative (2).

5. Poignée de réglage de vitesse de marche avant et de marche arrière de véhicule électrique, telle qu'énoncée dans la revendication 1, 2 ou 3, **caractérisée en ce que** : le ressort à rotation à gauche (6) et le ressort à rotation à droite (7) possèdent une rigidité telle que la force externe permettant de tourner la poignée rotative (2) dans le sens inverse des aiguilles d'une montre à partir de la position de remise à l'état initial est inférieure à la force externe permettant de tourner la poignée rotative (2) dans le sens des aiguilles d'une montre à partir de la position de remise à l'état initial.

6. Poignée de réglage de vitesse de marche avant et de marche arrière de véhicule électrique, telle qu'énoncée dans la revendication 1, **caractérisée en ce qu'**elle comprend en outre un dispositif de limite de position destiné à limiter un angle maximal auquel la poignée rotative est apte à tourner dans le sens inverse des aiguilles d'une montre à partir de la position de remise à l'état initial et un angle maximal auquel la poignée rotative (2) est apte à tourner dans le sens des aiguilles d'une montre à partir de la position de remise à l'état initial.

7. Poignée de réglage de vitesse de marche avant et de marche arrière de véhicule électrique, telle qu'énoncée dans la revendication 6, **caractérisée en ce que** : le dispositif de limite de position comprend une rainure en arc de limite de position (22) et un bloc de limite de position (13) ; la périphérie extérieure de la poignée rotative (2) présente la rainure en arc de limite de position (22) qui est coaxiale avec la poignée rotative (2) ; deux faces d'extrémités intérieures de la rainure en arc de limite de position (22) se trouvent à deux extrémités dans la direction circonférentielle de la poignée rotative (2) ; le bloc de limite de position (13) qui est inséré dans la rainure en arc de limite de position (22) dans une direction radiale de la poignée rotative (2) est placé sur la base de poignée (1) ; lorsque la poignée rotative (2) est tournée dans le sens inverse des aiguilles d'une montre à partir de la position de remise à l'état initial, à l'angle maximal, sous l'effet de la force externe, le bloc de limite de position (13) entre en contact avec une face d'extrémité intérieure (221) de la rainure en arc de limite de position (22), ce qui permet d'interdire à la poignée rotative (2) de tourner dans le sens inverse des aiguilles d'une montre ; lorsque la poignée rotative (2) est tournée dans le sens des aiguilles d'une montre à partir de la position de remise à l'état initial, à l'angle maximal, sous l'effet de la force externe, le bloc de limite de position (13) entre en contact avec l'autre face d'extrémité intérieure (222) de la rainure en arc de limite de position (22), ce qui permet d'interdire à la poignée rotative (2) de tourner dans le sens des aiguilles d'une montre.

8. Poignée de réglage de vitesse de marche avant et de marche arrière de véhicule électrique, telle qu'énoncée dans la revendication 7, **caractérisée en ce que** : la base de poignée (1) présente un trou traversant dans la direction radiale de la poignée rotative (2) ; le bloc de limite de position (13) est raccordé au trou traversant (12) de manière amovible, et s'étend dans la rainure en arc de limite de position (22) à travers le trou traversant (12).

9. Poignée de réglage de vitesse de marche avant et de marche arrière de véhicule électrique, telle qu'énoncée dans la revendication 8, **caractérisée en ce que** : l'aimant permanent en forme d'arc (3) est placé à la périphérie extérieure de la poignée rotative (2) ; l'aimant permanent en forme d'arc (3) et la rainure en arc de limite de position (22) se trouvent à des sections différentes de la poignée rotative (2) ; une assise de capteur (15) est reliée au bloc de limite de position (13), et le capteur à effet Hall (4) est monté sur l'assise de capteur (15) ; le bloc de limite de position (13) et l'assise de capteur (15) traversent le trou traversant (12) ; le capteur à effet Hall (4) et l'aimant permanent en forme d'arc (3) sont en regard l'un de l'autre dans une direction perpendiculaire à l'axe de la poignée rotative (2).

10. Poignée de réglage de vitesse de marche avant et de marche arrière de véhicule électrique, telle qu'énoncée dans la revendication 1, 2 ou 3, **caractérisée en ce que** : un bossage (22) se trouve sur une face d'extrémité de la poignée rotative (2), et la base de poignée (1) présente une rainure circulaire (11) où le bossage (22) est inséré ; la rainure circulaire (11) est coaxiale avec la poignée rotative (2) ; un coulisseau (5) qui est apte à coulisser autour d'un axe de la rainure circulaire (11) le long de la rainure circulaire (11) est placé à l'intérieur de la rainure circulaire (11) ; le ressort à rotation à gauche (6) permettant de pousser le coulisseau (5) pour qu'il se déplace dans le sens inverse des aiguilles d'une montre à l'intérieur de la rainure circulaire (11) est placé entre le coulisseau (5) et un siège de ressort (13) sur un fond de la rainure circulaire (11) ; une barrière de limite de position vers l'arrière (14) destinée à limiter la position à laquelle le coulisseau (5) est apte à se déplacer dans le sens inverse des aiguilles d'une montre à l'intérieur de la rainure circulaire (11) est placée sur une paroi latérale de la rainure circulaire (11) ; lorsque la poignée rotative (2) se trouve dans la position de remise à l'état initial, le ressort à rotation à gauche (6) entraîne le coulisseau (5) pour qu'il vienne au contact de la barrière de limite de position arrière (14), et le ressort à rotation à droite (7) entraîne le bossage (22) pour qu'il vienne au contact du coulisseau (5).

11. Poignée de réglage de vitesse de marche avant et de marche arrière de véhicule électrique, telle qu'énoncée dans la revendication 10, **caractérisée en ce que** : une barrière de limite de position vers l'avant (12) est placée au fond de la rainure circulaire ; lorsque la poignée rotative (2) est tournée dans le sens inverse des aiguilles d'une montre à partir de la position de remise à l'état initial, à un certain angle, sous l'effet de la force externe, le bloc de limite de position vers l'avant (12) entre en contact avec la poignée rotative (2), ce qui permet d'interdire à la poignée rotative (2) de tourner dans le sens inverse des aiguilles d'une montre ; le certain angle est un angle maximal auquel la poignée rotative (2) est apte à tourner dans le sens inverse des aiguilles d'une montre à partir de la position de remise à l'état initial, sous l'effet de la force externe.

12. Véhicule électrique caractérisé en qu'il comprend : un dispositif de commande destiné à commander un moteur qui entraîne le véhicule électrique et la poignée de réglage de vitesse de marche avant et de marche arrière de véhicule électrique, telle qu'énoncée dans l'une quelconque des revendications précédentes, dans lequel : le dispositif de commande est électriquement connecté au capteur à effet Hall (4) ; le dispositif de commande reçoit un signal de sortie du capteur à effet Hall (4) et commande le moteur pour qu'il délivre un couple dans le sens inverse des aiguilles d'une montre ou un couple dans le sens des aiguilles d'une montre, en fonction de différents signaux de sortie du capteur à effet Hall (4).

13. Véhicule électrique tel qu'énoncé dans la revendication 12, **caractérisé en ce que** : lorsque la poignée rotative (2) se trouve dans la position de remise à l'état initial, le signal de sortie du capteur à effet Hall (4) est un signal de référence T ; étant donné R, le signal de sortie du capteur à effet Hall (4), lorsque la poignée rotative (2) se trouve à une certaine position, le moteur ne délivre aucun couple lorsque T + T ^{∗} 5 % ≥ R ≥ T - T ^{∗} 5 % ; un sens du couple délivré par le moteur lorsque R > T + T ^{∗} 5 % est opposé à un sens du couple délivré par le moteur lorsque R < T - T ^{∗} 5 %, une valeur du couple délivré par le moteur lorsque R > T + T ^{∗} 5 % augmente avec une augmentation de R - (T + T ^{∗} 5 %) ; une valeur du couple délivré par le moteur lorsque R < T - T ^{∗} 5 % augmente avec une augmentation de (T - T ^{∗} 5 %) - R.
